(19) Europäisches Patentamt
European Patent Office
Office européen des brevets

(11) **EP 3 459 989 A1**

(12) **EUROPÄISCHE PATENTANMELDUNG**

(43) Veröffentlichungstag:
**27.03.2019 Patentblatt 2019/13**

(51) Int Cl.:
***C08J 5/18*** *(2006.01)*

(21) Anmeldenummer: **18183243.7**

(22) Anmeldetag: **12.07.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **10.07.2017 DE 102017115380**

(71) Anmelder: **Klöckner Pentaplast GmbH 56412 Heiligenroth (DE)**

(72) Erfinder:
• **Garriga, Jordi**
  **08470 Saint Celoni (ES)**
• **Schlicht, Rainer**
  **85622 Feldkirchen (DE)**

(74) Vertreter: **Plate, Jürgen**
  **Plate Schweitzer Zounek**
  **Patentanwälte**
  **Rheingaustrasse 196**
  **65203 Wiesbaden (DE)**

(54) **FOLIE MIT INLAYDEKOR**

(57) Eine ein- oder mehrlagige Folie umfasst mindestens eine Dekorlage mit einer Matrix aus einem ersten polymeren Werkstoff und in die Matrix eingebetteten Schlieren aus einem zweiten polymeren Werkstoff.

Fig. 1

**Beschreibung**

Die vorliegende Erfindung betrifft eine ein- oder mehrlagige Folie.

Im Stand der Technik sind verschiedenste Arten von Kunststofffolien für die Verpackung von Konsumartikeln und Lebensmitteln bekannt. Für die Beschichtung von Möbeln und Bodenbelägen, wie Laminat werden große Mengen an Dekorfolien eingesetzt. Bei der Verpackung von Lebensmitteln und Konsumartikeln nehmen gefärbte, dekorierte und bedruckte Folien eine bedeutende Rolle ein. Foliendekors werden durch Bedrucken erzeugt, was je nach Komplexität des Dekors einen erheblichen Mehraufwand bedeutet. Zudem ist die Bedruckung anfällig für Beschädigung durch mechanische Einwirkung. Bei der Verwendung für Lebensmittel muss zudem gewährleistet sein, dass von dem Dekordruck keine Farbstoffe und Druckadditive in die Lebensmittel migrieren können. Aus den vorstehenden Gründen ist es gängige Praxis, auf eine mit einem Dekordruck ausgestattete Folie eine transparente Schutzfolie aufzukaschieren oder mit einer Lackierung abzudecken.

Die vorliegende Erfindung hat die Aufgabe, eine Dekorfolie zu schaffen, zu deren Herstellung keine Bedruckung erforderlich ist und deren Dekor unempfindlich gegenüber mechanischer Einwirkung ist. Im Weiteren soll die Dekorfolie für den direkten Kontakt mit Lebensmitteln geeignet sein.

Diese Aufgabe wird gelöst durch eine ein- oder mehrlagige Folie mit mindestens einer Dekorlage, die eine Matrix aus einem ersten polymeren Werkstoff und in die Matrix eingebetteten Schlieren aus einem zweiten polymeren Werkstoff umfasst.

Vorteilhafte Ausführungsformen der erfindungsgemäßen Folie sind dadurch gekennzeichnet, dass

- die Schlieren eine streifenförmige Kontur aufweisen;

- die Schlieren eine streifenförmige Kontur mit Wirbeln aufweisen;

- die Schlieren eine streifenförmige Kontur mit zufällig schwankender Breite aufweisen;

- die Schlieren eine streifenförmige Kontur mit optisch fließendem Übergang in die Matrix haben;

- eine Längsachse der Schlieren parallel zu einer Maschinenrichtung der Folie orientiert ist;

- die Schlieren in einer Transversalrichtung der Folie eine Breite von 0,5 bis 20 mm, 0,5 bis 15 mm, 0,5 bis 10 mm oder 0,5 bis 5 mm haben;

- die mindestens eine, Schlieren enthaltende Dekorlage eine Oberfläche der Folie bildet;

- die Folie 30 bis 3000 $\mu$m dick ist;

- die Folie 30 bis 2000 $\mu$m, 30 bis 1500 $\mu$m, 30 bis 1200 $\mu$m, 50 bis 2000 $\mu$m, 50 bis 1500 $\mu$m, 50 bis 1200 $\mu$m, 100 bis 1500 $\mu$m, 200 bis 1500 $\mu$m, 50 bis 500 $\mu$m, 50 bis 400 $\mu$m oder 50 bis 300 $\mu$m dick ist;

- die Dicke der mindestens einen, Schlieren enthaltenden Dekorlage 1 bis 1000 $\mu$m, 1bis 800 $\mu$m, 1 bis 600 $\mu$m, 1 bis 400 $\mu$m, 1 bis 200 $\mu$m, 1 bis 100 $\mu$m oder 1 bis 50 $\mu$m beträgt;

- eine Dicke der mindestens einen, Schlieren enthaltenden Dekorlage, bezogen auf die Dicke der Folie 1 bis 15 % beträgt;

- die Folie thermoformbar ist;

- die Folie zwei-, drei-, vier-, fünf-, sechs-, sieben-, acht-, neun- oder zehnlagig ausgebildet ist;

- die Folie zwei oder mehr, Schlieren enthaltende Dekorlagen umfasst;

- die Folie zweilagig ausgebildet ist und eine opake Trägerlage umfasst;

- die Folie zweilagig ausgebildet ist und eine farbige Trägerlage umfasst;

- die Folie dreilagig ausgebildet ist und eine erste, Schlieren enthaltende Dekorlage, eine opake Kernlage und eine zweite, Schlieren enthaltende Dekorlage umfasst, wobei die opake Kernlage zwischen der ersten und zweiten, Schlieren enthaltenden Dekorlage angeordnet ist;

- die Folie dreilagig ausgebildet ist und eine erste, Schlieren enthaltende Dekorlage, eine farbige Kernlage und eine zweite, Schlieren enthaltende Dekorlage umfasst, wobei die farbige Kernlage zwischen der ersten und zweiten, Schlieren enthaltenden Dekorlage angeordnet ist;

- die Folie vierlagig ausgebildet ist und eine erste, Schlieren enthaltende Dekorlage, eine erste opake Kernlage, eine zweite opake Kernlage und eine zweite, Schlieren enthaltende Dekorlage umfasst, wobei die erste und zweite opake Kernlage zwischen der ersten und zweiten, Schlieren enthaltenden Dekorlage angeordnet sind;

- die Folie vierlagig ausgebildet ist und eine erste, Schlieren enthaltende Dekorlage, eine erste farbige Kernlage, eine zweite farbige Kernlage und eine zweite, Schlieren enthaltende Dekorlage umfasst, wobei die erste und zweite farbige Kernlage zwischen der ersten und zweiten, Schlieren enthaltenden Dekorlage angeordnet sind;

- die mindestens eine, Schlieren enthaltende Dekorlage zwischen zwei oder mehr als zwei äußeren Lagen angeordnet ist, wobei die auf mindestens einer Seite der Schlieren enthaltenden Dekorlage befindlichen äußeren Lagen transparent sind;

- die mindestens eine, Schlieren enthaltenden Dekorlage zwischen zwei oder mehr als zwei äußeren Lagen angeordnet ist, wobei eine der, auf mindestens einer Seite der Schlieren enthaltenden Dekorlage befindlichen äußeren Lagen transparent und siegelbar ist;

- das Volumenverhältnis der Schlieren zur Matrix 0,5 bis 15 Vol-% beträgt;

- das Volumenverhältnis der Schlieren zur Matrix 0,5 bis 10 Vol-%, 0,5 bis 8 Vol-%, 0,5 bis 6 Vol-% oder 0,5 bis 4 Vol-% beträgt;

- die Matrix der Schlieren enthaltenden Dekorlage transparent ist;

- die Matrix der Schlieren enthaltenden Dekorlage eine optische Transmission von $\geq 50\ \%$, $\geq 60\ \%$, $\geq 70\ \%$, $\geq 80\ \%$ oder $\geq 90\ \%$ aufweist;

- der erste polymere Werkstoff der Schlieren enthaltenden Dekorlage transparent ist;

- der zweite polymere Werkstoff der Schlieren enthaltenden Dekorlage transparent ist;

- der zweite polymere Werkstoff der Schlieren enthaltenden Dekorlage einen oder mehrere Farbstoffe oder Farbpigmente enthält;

- der zweite polymere Werkstoff der Schlieren enthaltenden Dekorlage einen braunen Farbstoff oder braune Farbpigmente enthält;

- der zweite polymere Werkstoff der Schlieren enthaltenden Dekorlage einen weißen Farbstoff oder weiße Farbpigmente enthält;

- der zweite polymere Werkstoff Partikel aus einem mineralischen Werkstoff, wie beispielsweise Glimmer enthält;

- der zweite polymere Werkstoff der Schlieren enthaltenden Dekorlage Partikel aus einem metallischen Werkstoff, wie beispielsweise Aluminium enthält;

- der erste polymere Werkstoff der Schlieren enthaltenden Dekorlage einen oder mehrere Farbstoffe oder Farbpigmente enthält;

- der erste polymere Werkstoff der Schlieren enthaltenden Dekorlage einen braunen Farbstoff oder braune Farbpigmente enthält;

- der erste polymere Werkstoff der Schlieren enthaltenden Dekorlage einen weißen Farbstoff oder weiße Farbpigmente enthält;

- der erste polymere Werkstoff der Schlieren enthaltenden Dekorlage Partikel aus einem mineralischen Werkstoff, wie beispielsweise Glimmer enthält;

- der erste polymere Werkstoff der Schlieren enthaltenden Dekorlage Partikel aus einem metallischen Werkstoff, wie beispielsweise Aluminium enthält;

- der erste polymere Werkstoff der Schlieren enthaltenden Dekorlage transparent ist und der zweite polymere Werkstoff einen oder mehrere Farbstoffe oder Farbpigmente enthält;

- der zweite polymere Werkstoff der Schlieren enthaltenden Dekorlage transparent ist und der erste polymere Werkstoff einen oder mehrere Farbstoffe oder Farbpigmente enthält;

- der erste und zweite polymere Werkstoff der Schlieren enthaltenden Dekorlage jeweils einen oder mehrere Farbstoffe oder Farbpigmente enthalten, wobei die Farbstoffe oder Farbpigmente des ersten und zweiten polymeren Werkstoffes voneinander verschiedene Farben haben und/oder in unterschiedlichen Konzentrationen in dem ersten und zweiten polymeren Werkstoff enthalten sind;

- der erste und zweite polymere Werkstoff der Schlieren enthaltenden Dekorlage transparent ist und der erste polymere Werkstoff transparente Pigmente enthält, die einen von dem ersten polymeren Werkstoff verschiedenen Brechungsindex haben;

- der erste und zweite polymere Werkstoff der Schlieren enthaltenden Dekorlage transparent ist und der zweite polymere Werkstoff transparente Pigmente enthält, die einen von dem ersten polymeren Werkstoff verschiedenen Brechungsindex haben;

- die Folie zwei oder mehr, Schlieren enthaltende Dekorlagen umfasst, wobei die zwei oder mehr Dekorlagen aus voneinander verschiedenen polymeren Werkstoffen bestehen;

- die Folie zwei oder mehr, Schlieren enthaltende Dekorlagen umfasst, wobei zwei oder mehr Dekorlagen aus gleichartigen polymeren Werkstoffen bestehen;

- die Folie zwei oder mehr, Schlieren enthaltende Dekorlagen umfasst, wobei die zwei oder mehr Dekorlagen voneinander verschiedene Farbstoffe oder Farbpigmente enthalten;

- der erste und zweite polymere Werkstoff der Schlieren enthaltenden Dekorlage eine Schmelze-Massefließrate $MFI_1$ und respektive $MFI_2$ aufweisen mit

$$0,2 \leq 2 \, | \, MFI_1 - MFI_2 \, | \, / \, ( \, MFI_1 + MFI_2 \, ) \leq 2,0 \, ;$$

- der erste und zweite polymere Werkstoff der Schlieren enthaltenden Dekorlage eine Schmelze-Massefließrate $MFI_1$ und respektive $MFI_2$ aufweisen mit

$$0,3 \leq 2 \, | \, MFI_1 - MFI_2 \, | \, / \, ( \, MFI_1 + MFI_2 \, ) \leq 2,0 \, ;$$

- der erste und zweite polymere Werkstoff der Schlieren enthaltenden Dekorlage eine Schmelze-Massefließrate $MFI_1$ und respektive $MFI_2$ aufweisen mit

$$0,4 \leq 2 \, | \, MFI_1 - MFI_2 \, | \, / \, ( \, MFI_1 + MFI_2 \, ) \leq 2,0 \, ;$$

- der erste und zweite polymere Werkstoff der Schlieren enthaltenden Dekorlage eine Schmelze-Massefließrate $MFI_1$ und respektive $MFI_2$ aufweisen mit

$$0,5 \leq 2 \, | \, MFI_1 - MFI_2 \, | \, / \, ( \, MFI_1 + MFI_2 \, ) \leq 2,0 \, ;$$

- der erste und zweite polymere Werkstoff der Schlieren enthaltenden Dekorlage eine Schmelze-Massefließrate $MFI_1$ und respektive $MFI_2$ aufweisen mit

$$0{,}6 \leq 2\,|\,MFI_1 - MFI_2\,|\,/\,(\,MFI_1 + MFI_2\,) \leq 2{,}0\;;$$

- der erste und zweite polymere Werkstoff der Schlieren enthaltenden Dekorlage eine Schmelze-Massefließrate $MFI_1$ und respektive $MFI_2$ aufweisen mit

$$0{,}7 \leq 2\,|\,MFI_1 - MFI_2\,|\,/\,(\,MFI_1 + MFI_2\,) \leq 2{,}0\;;$$

- der erste und zweite polymere Werkstoff der Schlieren enthaltenden Dekorlage eine Schmelze-Massefließrate $MFI_1$ und respektive $MFI_2$ aufweisen mit

$$0{,}8 \leq 2\,|\,MFI_1 - MFI_2\,|\,/\,(\,MFI_1 + MFI_2\,) \leq 2{,}0\;;$$

- der erste und zweite polymere Werkstoff der Schlieren enthaltenden Dekorlage eine Schmelze-Massefließrate $MFI_1$ und respektive $MFI_2$ aufweisen mit $MFI_1 > MFI_2$ und $0{,}2 \leq 2|MFI_1 - MFI_2|/(MFI_1 + MFI_2) \leq 2{,}0$ ;

- der erste und zweite polymere Werkstoff der Schlieren enthaltenden Dekorlage eine Schmelze-Massefließrate $MFI_1$ und respektive $MFI_2$ aufweisen mit $MFI_1 > MFI_2$ und $0{,}3 \leq 2|MFI_1 - MFI_2|/(MFI_1 + MFI_2) \leq 2{,}0$ ;

- der erste und zweite polymere Werkstoff der Schlieren enthaltenden Dekorlage eine Schmelze-Massefließrate $MFI_1$ und respektive $MFI_2$ aufweisen mit $MFI_1 > MFI_2$ und $0{,}4 \leq 2|MFI_1 - MFI_2|/(MFI_1 + MFI_2) \leq 2{,}0$ ;

- der erste und zweite polymere Werkstoff der Schlieren enthaltenden Dekorlage eine Schmelze-Massefließrate $MFI_1$ und respektive $MFI_2$ aufweisen mit $MFI_1 > MFI_2$ und $0{,}5 \leq 2|MFI_1 - MFI_2|/(MFI_1 + MFI_2) \leq 2{,}0$ ;

- der erste und zweite polymere Werkstoff der Schlieren enthaltenden Dekorlage eine Schmelze-Massefließrate $MFI_1$ und respektive $MFI_2$ aufweisen mit $MFI_1 > MFI_2$ und $0{,}6 \leq 2|MFI_1 - MFI_2|/(MFI_1 + MFI_2) \leq 2{,}0$ ;

- der erste und zweite polymere Werkstoff der Schlieren enthaltenden Dekorlage eine Schmelze-Massefließrate $MFI_1$ und respektive $MFI_2$ aufweisen mit $MFI_1 > MFI_2$ und $0{,}7 \leq 2|MFI_1 - MFI_2|/(MFI_1 + MFI_2) \leq 2{,}0$ ;

- der erste und zweite polymere Werkstoff der Schlieren enthaltenden Dekorlage eine Schmelze-Massefließrate $MFI_1$ und respektive $MFI_2$ aufweisen mit $MFI_1 > MFI_2$ und $0{,}8 \leq 2|MFI_1 - MFI_2|/(MFI_1 + MFI_2) \leq 2{,}0$ ;

- der erste und zweite polymere Werkstoff der Schlieren enthaltenden Dekorlage eine Schmelze-Massefließrate $MFI_1$ und respektive $MFI_2$ aufweisen mit $MFI_1 < MFI_2$ und $0{,}2 \leq 2|MFI_1 - MFI_2|/(MFI_1 + MFI_2) \leq 2{,}0$ ;

- der erste und zweite polymere Werkstoff der Schlieren enthaltenden Dekorlage eine Schmelze-Massefließrate $MFI_1$ und respektive $MFI_2$ aufweisen mit $MFI_1 < MFI_2$ und $0{,}3 \leq 2|MFI_1 - MFI_2|/(MFI_1 + MFI_2) \leq 2{,}0$ ;

- der erste und zweite polymere Werkstoff der Schlieren enthaltenden Dekorlage eine Schmelze-Massefließrate $MFI_1$ und respektive $MFI_2$ aufweisen mit $MFI_1 < MFI_2$ und $0{,}4 \leq 2|MFI_1 - MFI_2|/(MFI_1 + MFI_2) \leq 2{,}0$ ;

- der erste und zweite polymere Werkstoff der Schlieren enthaltenden Dekorlage eine Schmelze-Massefließrate $MFI_1$ und respektive $MFI_2$ aufweisen mit $MFI_1 < MFI_2$ und $0{,}5 \leq 2|MFI_1 - MFI_2|/(MFI_1 + MFI_2) \leq 2{,}0$ ;

- der erste und zweite polymere Werkstoff der Schlieren enthaltenden Dekorlage eine Schmelze-Massefließrate $MFI_1$ und respektive $MFI_2$ aufweisen mit $MFI_1 < MFI_2$ und $0{,}6 \leq 2|MFI_1 - MFI_2|/(MFI_1 + MFI_2) \leq 2{,}0$ ;

- der erste und zweite polymere Werkstoff der Schlieren enthaltenden Dekorlage eine Schmelze-Massefließrate $MFI_1$ und respektive $MFI_2$ aufweisen mit $MFI_1 < MFI_2$ und $0{,}7 \leq 2|MFI_1 - MFI_2|/(MFI_1 + MFI_2) \leq 2{,}0$ ;

- der erste und zweite polymere Werkstoff der Schlieren enthaltenden Dekorlage eine Schmelze-Massefließrate $MFI_1$

und respektive $MFI_2$ aufweisen mit $MFI_1 < MFI_2$ und $0,8 \leq 2|MFI_1 - MFI_2|/(MFI_1 + MFI_2) \leq 2,0$ ;

- der erste polymere Werkstoff der Schlieren enthaltenden Dekorlage eine Schmelze-Massefließrate $MFI_1$ im Bereich von 1 bis 150 g/10 min aufweist;

- der erste polymere Werkstoff der Schlieren enthaltenden Dekorlage eine Schmelze-Massefließrate $MFI_1$ im Bereich von 10 bis 150 g/10 min aufweist;

- der erste polymere Werkstoff der Schlieren enthaltenden Dekorlage eine Schmelze-Massefließrate $MFI_1$ im Bereich von 20 bis 150 g/10 min aufweist;

- der erste polymere Werkstoff der Schlieren enthaltenden Dekorlage eine Schmelze-Massefließrate $MFI_1$ im Bereich von 30 bis 150 g/10 min aufweist;

- der erste polymere Werkstoff der Schlieren enthaltenden Dekorlage eine Schmelze-Massefließrate $MFI_1$ im Bereich von 40 bis 150 g/10 min aufweist;

- der erste polymere Werkstoff der Schlieren enthaltenden Dekorlage eine Schmelze-Massefließrate $MFI_1$ im Bereich von 50 bis 150 g/10 min aufweist;

- der erste polymere Werkstoff der Schlieren enthaltenden Dekorlage eine Schmelze-Massefließrate $MFI_1$ im Bereich von 50 bis 100 g/10 min aufweist;

- der erste polymere Werkstoff der Schlieren enthaltenden Dekorlage eine Schmelze-Massefließrate $MFI_1$ im Bereich von 20 bis 50 g/10 min aufweist;

- der zweite polymere Werkstoff der Schlieren enthaltenden Dekorlage eine Schmelze-Massefließrate $MFI_2$ im Bereich von 1 bis 150 g/10 min aufweist;

- der zweite polymere Werkstoff der Schlieren enthaltenden Dekorlage eine Schmelze-Massefließrate $MFI_2$ im Bereich von 1 bis 100 g/10 min aufweist;

- der zweite polymere Werkstoff der Schlieren enthaltenden Dekorlage eine Schmelze-Massefließrate $MFI_2$ im Bereich von 1 bis 50 g/10 min aufweist;

- der zweite polymere Werkstoff der Schlieren enthaltenden Dekorlage eine Schmelze-Massefließrate $MFI_2$ im Bereich von 1 bis 40 g/10 min aufweist;

- der zweite polymere Werkstoff der Schlieren enthaltenden Dekorlage eine Schmelze-Massefließrate $MFI_2$ im Bereich von 1 bis 30 g/10 min aufweist;

- der zweite polymere Werkstoff der Schlieren enthaltenden Dekorlage eine Schmelze-Massefließrate $MFI_2$ im Bereich von 1 bis 20 g/10 min aufweist;

- der zweite polymere Werkstoff der Schlieren enthaltenden Dekorlage eine Schmelze-Massefließrate $MFI_2$ im Bereich von 1 bis 10 g/10 min aufweist;

- der zweite polymere Werkstoff der Schlieren enthaltenden Dekorlage eine Schmelze-Massefließrate $MFI_2$ im Bereich von 4 bis 8 g/10 min aufweist;

- die mindestens eine Schlieren enthaltende Dekorlage einen dritten polymeren Werkstoff umfasst;

- der dritte polymere Werkstoff der Schlieren enthaltenden Dekorlage einen oder mehrere Farbstoffe oder Farbpigmente enthält;

- der dritte polymere Werkstoff der Schlieren enthaltenden Dekorlage einen braunen Farbstoff oder braune Farbpigmente enthält;

- der dritte polymere Werkstoff der Schlieren enthaltenden Dekorlage einen weißen Farbstoff oder weiße Farbpigmente enthält;

- der dritte polymere Werkstoff der Schlieren enthaltenden Dekorlage Partikel aus einem mineralischen Werkstoff, wie beispielsweise Glimmer enthält;

- der dritte polymere Werkstoff der Schlieren enthaltenden Dekorlage Partikel aus einem metallischen Werkstoff, wie beispielsweise Aluminium enthält;

- der erste und dritte polymere Werkstoff der Schlieren enthaltenden Dekorlage eine Schmelze-Massefließrate $MFI_1$ und respektive $MFI_3$ aufweisen mit

$$0,2 \leq 2\,|\,MFI_1 - MFI_3\,|\,/\,(\,MFI_1 + MFI_3\,) \leq 2,0\,;$$

- der erste und dritte polymere Werkstoff der Schlieren enthaltenden Dekorlage eine Schmelze-Massefließrate $MFI_1$ und respektive $MFI_3$ aufweisen mit

$$0,3 \leq 2\,|\,MFI_1 - MFI_3\,|\,/\,(\,MFI_1 + MFI_3\,) \leq 2,0\,;$$

- der erste und dritte polymere Werkstoff der Schlieren enthaltenden Dekorlage eine Schmelze-Massefließrate $MFI_1$ und respektive $MFI_3$ aufweisen mit

$$0,4 \leq 2\,|\,MFI_1 - MFI_3\,|\,/\,(\,MFI_1 + MFI_3\,) \leq 2,0\,;$$

- der erste und dritte polymere Werkstoff der Schlieren enthaltenden Dekorlage eine Schmelze-Massefließrate $MFI_1$ und respektive $MFI_3$ aufweisen mit

$$0,5 \leq 2\,|\,MFI_1 - MFI_3\,|\,/\,(\,MFI_1 + MFI_3\,) \leq 2,0\,;$$

- der erste und dritte polymere Werkstoff der Schlieren enthaltenden Dekorlage eine Schmelze-Massefließrate $MFI_1$ und respektive $MFI_3$ aufweisen mit

$$0,6 \leq 2\,|\,MFI_1 - MFI_3\,|\,/\,(\,MFI_1 + MFI_3\,) \leq 2,0\,;$$

- der erste und dritte polymere Werkstoff der Schlieren enthaltenden Dekorlage eine Schmelze-Massefließrate $MFI_1$ und respektive $MFI_3$ aufweisen mit

$$0,7 \leq 2\,|\,MFI_1 - MFI_3\,|\,/\,(\,MFI_1 + MFI_3\,) \leq 2,0\,;$$

- der erste und dritte polymere Werkstoff der Schlieren enthaltenden Dekorlage eine Schmelze-Massefließrate $MFI_1$ und respektive $MFI_3$ aufweisen mit

$$0,8 \leq 2\,|\,MFI_1 - MFI_3\,|\,/\,(\,MFI_1 + MFI_3\,) \leq 2,0\,;$$

- der erste und dritte polymere Werkstoff der Schlieren enthaltenden Dekorlage eine Schmelze-Massefließrate $MFI_1$ und respektive $MFI_3$ aufweisen mit $MFI_1 < MFI_3$ und $0,2 \leq 2|MFI_1 - MFI_3|/(MFI_1 + MFI_3) \leq 2,0$ ;

- der erste und dritte polymere Werkstoff der Schlieren enthaltenden Dekorlage eine Schmelze-Massefließrate $MFI_1$ und respektive $MFI_3$ aufweisen mit $MFI_1 < MFI_3$ und $0,3 \leq 2|MFI_1 - MFI_3|/(MFI_1 + MFI_3) \leq 2,0$ ;

- der erste und dritte polymere Werkstoff der Schlieren enthaltenden Dekorlage eine Schmelze-Massefließrate $MFI_1$

und respektive $MFI_3$ aufweisen mit $MFI_1 < MFI_3$ und $0,4 \leq 2|MFI_1 - MFI_3|/(MFI_1 + MFI_3) \leq 2,0$ ;

- der erste und dritte polymere Werkstoff der Schlieren enthaltenden Dekorlage eine Schmelze-Massefließrate $MFI_1$ und respektive $MFI_3$ aufweisen mit $MFI_1 < MFI_3$ und $0,5 \leq 2|MFI_1 - MFI_3|/(MFI_1 + MFI_3) \leq 2,0$ ;

- der erste und dritte polymere Werkstoff der Schlieren enthaltenden Dekorlage eine Schmelze-Massefließrate $MFI_1$ und respektive $MFI_3$ aufweisen mit $MFI_1 < MFI_3$ und $0,6 \leq 2|MFI_1 - MFI_3|/(MFI_1 + MFI_3) \leq 2,0$ ;

- der erste und dritte polymere Werkstoff der Schlieren enthaltenden Dekorlage eine Schmelze-Massefließrate $MFI_1$ und respektive $MFI_3$ aufweisen mit $MFI_1 < MFI_3$ und $0,7 \leq 2|MFI_1 - MFI_3|/(MFI_1 + MFI_3) \leq 2,0$ ;

- der erste und dritte polymere Werkstoff der Schlieren enthaltenden Dekorlage eine Schmelze-Massefließrate $MFI_1$ und respektive $MFI_3$ aufweisen mit $MFI_1 < MFI_3$ und $0,8 \leq 2|MFI_1 - MFI_3|/(MFI_1 + MFI_3) \leq 2,0$ ;

- der erste und dritte polymere Werkstoff der Schlieren enthaltenden Dekorlage eine Schmelze-Massefließrate $MFI_1$ und respektive $MFI_3$ aufweisen mit $MFI_1 > MFI_3$ und $0,2 \leq 2|MFI_1 - MFI_3|/(MFI_1 + MFI_3) \leq 2,0$ ;

- der erste und dritte polymere Werkstoff der Schlieren enthaltenden Dekorlage eine Schmelze-Massefließrate $MFI_1$ und respektive $MFI_3$ aufweisen mit $MFI_1 > MFI_3$ und $0,3 \leq 2|MFI_1 - MFI_3|/(MFI_1 + MFI_3) \leq 2,0$ ;

- der erste und dritte polymere Werkstoff der Schlieren enthaltenden Dekorlage eine Schmelze-Massefließrate $MFI_1$ und respektive $MFI_3$ aufweisen mit $MFI_1 > MFI_3$ und $0,4 \leq 2|MFI_1 - MFI_3|/(MFI_1 + MFI_3) \leq 2,0$ ;

- der erste und dritte polymere Werkstoff der Schlieren enthaltenden Dekorlage eine Schmelze-Massefließrate $MFI_1$ und respektive $MFI_3$ aufweisen mit $MFI_1 > MFI_3$ und $0,5 \leq 2|MFI_1 - MFI_3|/(MFI_1 + MFI_3) \leq 2,0$ ;

- der erste und dritte polymere Werkstoff der Schlieren enthaltenden Dekorlage eine Schmelze-Massefließrate $MFI_1$ und respektive $MFI_3$ aufweisen mit $MFI_1 > MFI_3$ und $0,6 \leq 2|MFI_1 - MFI_3|/(MFI_1 + MFI_3) \leq 2,0$ ;

- der erste und dritte polymere Werkstoff der Schlieren enthaltenden Dekorlage eine Schmelze-Massefließrate $MFI_1$ und respektive $MFI_3$ aufweisen mit $MFI_1 > MFI_3$ und $0,7 \leq 2|MFI_1 - MFI_3|/(MFI_1 + MFI_3) \leq 2,0$ ;

- der erste und dritte polymere Werkstoff der Schlieren enthaltenden Dekorlage eine Schmelze-Massefließrate $MFI_1$ und respektive $MFI_3$ aufweisen mit $MFI_1 > MFI_3$ und $0,8 \leq 2|MFI_1 - MFI_3|/(MFI_1 + MFI_3) \leq 2,0$ ;

- der zweite und dritte polymere Werkstoff eine Schmelze-Massefließrate $MFI_2$ und respektive $MFI_3$ aufweisen mit $0,3 \leq 2|MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $0,4 \leq 2|MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $0,5 \leq 2|MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $0,6 \leq 2|MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $0,7 \leq 2|MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $0,8 \leq 2|MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $MFI_2 < MFI_3$ und $0,2 \leq 2|MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $MFI_2 < MFI_3$ und $0,3 \leq 2|MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $MFI_2 < MFI_3$ und $0,4 \le 2|MFI_2 - MFI_3|/(MFI_2 + MFI_3) \le 2,0$ ;

- der zweite und dritte polymere Werkstoff eine Schmelze-Massefließrate $MFI_2$ und respektive $MFI_3$ aufweisen mit $MFI_2 < MFI_3$ und $0,5 \le 2|MFI_2 - MFI_3|/(MFI_2 + MFI_3) \le 2,0$ ;

- der zweite und dritte polymere Werkstoff eine Schmelze-Massefließrate $MFI_2$ und respektive $MFI_3$ aufweisen mit $MFI_2 < MFI_3$ und $0,6 \le 2|MFI_2 - MFI_3|/(MFI_2 + MFI_3) \le 2,0$ ;

- der zweite und dritte polymere Werkstoff eine Schmelze-Massefließrate $MFI_2$ und respektive $MFI_3$ aufweisen mit $MFI_2 < MFI_3$ und $0,7 \le 2|MFI_2 - MFI_3|/(MFI_2 + MFI_3) \le 2,0$ ;

- der zweite und dritte polymere Werkstoff eine Schmelze-Massefließrate $MFI_2$ und respektive $MFI_3$ aufweisen mit $MFI_2 < MFI_3$ und $0,8 \le 2|MFI_2 - MFI_3|/(MFI_2 + MFI_3) \le 2,0$ ;

- der dritte polymere Werkstoff der Schlieren enthaltenden Dekorlage eine Schmelze-Massefließrate $MFI_1$ im Bereich von 1 bis 150 g/10 min aufweist;

- der dritte polymere Werkstoff der Schlieren enthaltenden Dekorlage eine Schmelze-Massefließrate $MFI_1$ im Bereich von 10 bis 150 g/10 min aufweist;

- der dritte polymere Werkstoff der Schlieren enthaltenden Dekorlage eine Schmelze-Massefließrate $MFI_1$ im Bereich von 20 bis 150 g/10 min aufweist;

- der dritte polymere Werkstoff der Schlieren enthaltenden Dekorlage eine Schmelze-Massefließrate $MFI_1$ im Bereich von 30 bis 150 g/10 min aufweist;

- der dritte polymere Werkstoff der Schlieren enthaltenden Dekorlage eine Schmelze-Massefließrate $MFI_3$ im Bereich von 40 bis 150 g/10 min aufweist;

- der dritte polymere Werkstoff der Schlieren enthaltenden Dekorlage eine Schmelze-Massefließrate $MFI_3$ im Bereich von 50 bis 150 g/10 min aufweist;

- der dritte polymere Werkstoff der Schlieren enthaltenden Dekorlage eine Schmelze-Massefließrate $MFI_3$ im Bereich von 50 bis 100 g/10 min aufweist;

- der erste, zweite und/oder dritte polymere Werkstoff der Schlieren enthaltenden Dekorlage unabhängig voneinander, bezogen auf ihr jeweiliges Gesamtgewicht aus 60 bis 99 Gew.-% eines oder mehrerer Polymere und 1 bis 40 Gew.-% eines oder mehrerer Additive besteht;

- der erste, zweite und/oder dritte polymere Werkstoff der Schlieren enthaltenden Dekorlage unabhängig voneinander ein Polyolefin enthält;

- der erste, zweite und/oder dritte polymere Werkstoff der Schlieren enthaltenden Dekorlage unabhängig voneinander ein oder mehrere Vinylchloridpolymerisate enthält;

- der erste, zweite und/oder dritte polymere Werkstoff der Schlieren enthaltenden Dekorlage unabhängig voneinander einen halbkristallinen oder amorphen Polyester enthält;

- der erste, zweite und/oder dritte polymere Werkstoff unabhängig voneinander Polyethylenterephthalat des Typs APET, PETP oder PETG enthält;

- der erste, zweite und/oder dritte polymere Werkstoff der Schlieren enthaltenden Dekorlage unabhängig voneinander Polypropylen enthält;

- der erste, zweite und/oder dritte polymere Werkstoff der Schlieren enthaltenden Dekorlage unabhängig voneinander Polystyrol enthält;

- der erste, zweite und/oder dritte polymere Werkstoff der Schlieren enthaltenden Dekorlage unabhängig voneinander Acrylbutadienstyrol (ABS) enthält;

- der erste, zweite und/oder dritte polymere Werkstoff der Schlieren enthaltenden Dekorlage unabhängig voneinander ein oder mehrere Additive enthält, die gewählt sind aus Verarbeitungshilfsmitteln, thermischen Stabilisatoren, Gleitmitteln, polymeren Modifikatoren, Schäumungsmitteln, Mattierungsmitteln, anorganischen Füllstoffen, Farbstoffen- und pigmenten, Fungiziden, UV-Stabilisatoren, Brandschutzmitteln und Duftstoffen;

- der erste, zweite und/oder dritte polymere Werkstoff der Schlieren enthaltenden Dekorlage unabhängig voneinander ein oder mehrere anorganische Füllstoffe, gewählt aus Kreide, Talk, Glimmer, Tonerde, Kaolin, Silikaten und Titanoxid enthält;

- der erste, zweite und/oder dritte polymere Werkstoff der Schlieren enthaltenden Dekorlage unabhängig voneinander ein oder mehrere Gleitmittel, gewählt aus Wachsen, Fetten, Paraffinen, epoxidiertem Sojaöl und Polymerisaten auf Basis von Acrylatestern enthält;

- der erste, zweite und/oder dritte polymere Werkstoff der Schlieren enthaltenden Dekorlage unabhängig voneinander einen oder mehrere polymere Modifikatoren, gewählt aus Polymerisaten auf Basis von Acrylat, Butyl-Methacrylat, Methacrylat-Butyl-Styrol, Methylmethacrylat-Butadien-Styrol und chloriertem Polyethylen enthält;

- die mindestens eine Schlieren enthaltende Dekorlage eine optische Textur mit holzartiger Anmutung hat;

- die mindestens eine Schlieren enthaltende Dekorlage eine optische Textur hat, deren Luminanz in Transversalrichtung der Folie auf einer Skala von 0 bis 255 eine Standardabweichung von 5 bis 50 aufweist;

- die mindestens eine Schlieren enthaltende Dekorlage eine optische Textur hat, deren Luminanz in Transversalrichtung der Folie auf einer Skala von 0 bis 255 eine Standardabweichung von 5 bis 30 aufweist;

- die mindestens eine Schlieren enthaltende Dekorlage eine optische Textur hat, deren Luminanz in Transversalrichtung der Folie auf einer Skala von 0 bis 255 eine Standardabweichung von 5 bis 20 aufweist;

- die mindestens eine Schlieren enthaltende Dekorlage eine optische Textur hat, deren Luminanz in Transversalrichtung der Folie auf einer Skala von 0 bis 255 eine Standardabweichung von 5 bis 15 aufweist;

- die mindestens eine Schlieren enthaltende Dekorlage eine optische Textur hat, deren Luminanz in Maschinenrichtung der Folie auf einer Skala von 0 bis 255 eine Standardabweichung von 0 bis 6 aufweist;

- die mindestens eine Schlieren enthaltende Dekorlage eine optische Textur hat, deren Luminanz in Transversal- und Maschinenrichtung der Folie eine Standardabweichung $S_T$ und respektive $S_M$ aufweist, wobei das Verhältnis $S_T / S_M \geq 1,2$ ist;

- die mindestens eine Schlieren enthaltende Dekorlage eine optische Textur hat, deren Luminanz in Transversal- und Maschinenrichtung der Folie eine Standardabweichung $S_T$ und respektive $S_M$ aufweist, wobei das Verhältnis $S_T / S_M \geq 1,5$ ist;

- die mindestens eine Schlieren enthaltende Dekorlage eine optische Textur hat, deren Luminanz in Transversal- und Maschinenrichtung der Folie eine Standardabweichung $S_T$ und respektive $S_M$ aufweist, wobei das Verhältnis $S_T / S_M \geq 2,0$ ist;

- die mindestens eine Schlieren enthaltende Dekorlage eine optische Textur hat mit einer Direktionalität von $\geq 20$ % in einem Winkelbereich von $\pm 30$ Grad um die Transversalrichtung;

- die mindestens eine Schlieren enthaltende Dekorlage eine optische Textur hat mit einer Direktionalität von $\geq 30$ % oder $\geq 40$ % in einem Winkelbereich von $\pm 30$ Grad um die Transversalrichtung;

- die mindestens eine Schlieren enthaltende Dekorlage eine optische Textur hat mit einer Direktionalität von $\geq 20$ %, $\geq 30$ % oder $\geq 40$ % in einem Winkelbereich von $\pm 25$ Grad um die Transversalrichtung;

- die mindestens eine Schlieren enthaltende Dekorlage eine optische Textur hat mit einer Direktionalität von $\geq 20\ \%$, $\geq 30\ \%$ oder $\geq 40\ \%$ in einem Winkelbereich von $\pm 20$ Grad um die Transversalrichtung;

- die mindestens eine Schlieren enthaltende Dekorlage eine optische Textur hat mit einer Direktionalität von $\geq 20\ \%$, $\geq 30\ \%$ oder $\geq 40\ \%$ in einem Winkelbereich von $\pm 15$ Grad um die Transversalrichtung;

- die mindestens eine Schlieren enthaltende Dekorlage eine erste Oberfläche oder Grenzfläche mit einem Mittenrauwert $R_a$ von $\leq 10\ \mu m$, $\leq 5\ \mu m$, $\leq 4\ \mu m$, $\leq 3\ \mu m$, $\leq 2\ \mu m$ oder $\leq 1\ \mu m$ aufweist;

- die mindestens eine Schlieren enthaltende Dekorlage eine erste Oberfläche oder Grenzfläche mit einer maximalen Rauheit $R_z$ von $\geq 3\ \mu m$, $\geq 5\ \mu m$, $\geq 7\ \mu m$, $\geq 10\ \mu m$, $\geq 15\ \mu m$ oder $\geq 20\ \mu m$ aufweist;

- die mindestens eine Schlieren enthaltende Dekorlage eine erste Oberfläche oder Grenzfläche mit einer maximalen Welligkeit $W_t$ von $\geq 4\ \mu m$, $\geq 6\ \mu m$, $\geq 8\ \mu m$, $\geq 12\ \mu m$ oder $\geq 16\ \mu m$ aufweist;

- die mindestens eine Schlieren enthaltende Dekorlage eine zweite Oberfläche oder Grenzfläche mit einem Mittenrauwert $R_a$ von $\leq 5\ \mu m$, $\leq 4\ \mu m$, $\leq 3\ \mu m$, $\leq 2\ \mu m$ oder $\leq 1\ \mu m$ aufweist;

- die mindestens eine Schlieren enthaltende Dekorlage eine zweite Oberfläche oder Grenzfläche mit einer maximalen Rauheit $R_z$ von $\geq 3\ \mu m$, $\geq 5\ \mu m$, $\geq 7\ \mu m$, $\geq 10\ \mu m$, $\geq 15\ \mu m$ oder $\geq 20\ \mu m$ aufweist; und/oder

- die mindestens eine Schlieren enthaltende Dekorlage eine zweite Oberfläche oder Grenzfläche mit einer maximalen Welligkeit $W_t$ von $\geq 4\ \mu m$, $\geq 6\ \mu m$, $\geq 8\ \mu m$, $\geq 12\ \mu m$ oder $\geq 16\ \mu m$ aufweist.

Eine weitere Aufgabe der Erfindung besteht darin, ein Verfahren für die Herstellung der vorstehend beschriebenen Folien bereitzustellen.
Diese Aufgabe wird gelöst durch ein Verfahren, umfassend die Schritte

(a) Bereitstellen eines ersten polymeren Werkstoffs mit Schmelze-Massefließrate $MFI_1$ ;

(b) Bereitstellen eines zweiten polymeren Werkstoffs mit Schmelze-Massefließrate $MFI_2$, wobei $0{,}2 \leq 2|MFI_1 - MFI_2|/(MFI_1 + MFI_2) \leq 2{,}0$ ist;

(c) Zuführen des ersten und zweiten polymeren Werkstoffs in einem Volumenverhältnis von 100:0,5 bis 100:15 in einen Extruder oder ein Knetaggregat;

(d) Plastifizieren des ersten und zweiten polymeren Werkstoffs in dem Extruder oder Knetaggregat;

(e) Formen einer ein- oder mehrlagigen Folie, wobei mindestens eine, den ersten und zweiten polymeren Werkstoff enthaltende Lage der Folie durch Extrusion, Koextrusion und/oder Kalandrieren geformt wird.

Vorteilhafte Ausführungsformen des erfindungsgemäßen Verfahrens sind dadurch gekennzeichnet, dass

- der erste und zweite polymere Werkstoff eine Schmelze-Massefließrate $MFI_1$ und respektive $MFI_2$ aufweisen mit $0{,}3 \leq 2|MFI_1 - MFI_2|/(MFI_1 + MFI_2) \leq 2{,}0$ ;

- der erste und zweite polymere Werkstoff eine Schmelze-Massefließrate $MFI_1$ und respektive $MFI_2$ aufweisen mit $0{,}4 \leq 2|MFI_1 - MFI_2|/(MFI_1 + MFI_2) \leq 2{,}0$ ;

- der erste und zweite polymere Werkstoff eine Schmelze-Massefließrate $MFI_1$ und respektive $MFI_2$ aufweisen mit $0{,}5 \leq 2|MFI_1 - MFI_2|/(MFI_1 + MFI_2) \leq 2{,}0$ ;

- der erste und zweite polymere Werkstoff eine Schmelze-Massefließrate $MFI_1$ und respektive $MFI_2$ aufweisen mit $0{,}6 \leq 2|MFI_1 - MFI_2|/(MFI_1 + MFI_2) \leq 2{,}0$ ;

- der erste und zweite polymere Werkstoff eine Schmelze-Massefließrate $MFI_1$ und respektive $MFI_2$ aufweisen mit $0{,}7 \leq 2|MFI_1 - MFI_2|/(MFI_1 + MFI_2) \leq 2{,}0$ ;

- der erste und zweite polymere Werkstoff eine Schmelze-Massefließrate $MFI_1$ und respektive $MFI_2$ aufweisen mit $0,8 \leq 2|MFI_1 - MFI_2|/(MFI_1 + MFI_2) \leq 2,0$ ;

- der erste und zweite polymere Werkstoff eine Schmelze-Massefließrate $MFI_1$ und respektive $MFI_2$ aufweisen mit $MFI_1 > MFI_2$ und $0,2 \leq 2|MFI_1 - MFI_2|/(MFI_1 + MFI_2) \leq 2,0$ ;

- der erste und zweite polymere Werkstoff eine Schmelze-Massefließrate $MFI_1$ und respektive $MFI_2$ aufweisen mit $MFI_1 > MFI_2$ und $0,3 \leq 2|MFI_1 - MFI_2|/(MFI_1 + MFI_2) \leq 2,0$ ;

- der erste und zweite polymere Werkstoff eine Schmelze-Massefließrate $MFI_1$ und respektive $MFI_2$ aufweisen mit $MFI_1 > MFI_2$ und $0,4 \leq 2|MFI_1 - MFI_2|/(MFI_1 + MFI_2) \leq 2,0$ ;

- der erste und zweite polymere Werkstoff eine Schmelze-Massefließrate $MFI_1$ und respektive $MFI_2$ aufweisen mit $MFI_1 > MFI_2$ und $0,5 \leq 2|MFI_1 - MFI_2|/(MFI_1 + MFI_2) \leq 2,0$ ;

- der erste und zweite polymere Werkstoff eine Schmelze-Massefließrate $MFI_1$ und respektive $MFI_2$ aufweisen mit $MFI_1 > MFI_2$ und $0,6 \leq 2|MFI_1 - MFI_2|/(MFI_1 + MFI_2) \leq 2,0$ ;

- der erste und zweite polymere Werkstoff eine Schmelze-Massefließrate $MFI_1$ und respektive $MFI_2$ aufweisen mit $MFI_1 > MFI_2$ und $0,7 \leq 2|MFI_1 - MFI_2|/(MFI_1 + MFI_2) \leq 2,0$ ;

- der erste und zweite polymere Werkstoff eine Schmelze-Massefließrate $MFI_1$ und respektive $MFI_2$ aufweisen mit $MFI_1 > MFI_2$ und $0,8 \leq 2|MFI_1 - MFI_2|/(MFI_1 + MFI_2) \leq 2,0$ ;

- der erste und zweite polymere Werkstoff eine Schmelze-Massefließrate $MFI_1$ und respektive $MFI_2$ aufweisen mit $MFI_1 < MFI_2$ und $0,2 \leq 2|MFI_1 - MFI_2|/(MFI_1 + MFI_2) \leq 2,0$ ;

- der erste und zweite polymere Werkstoff eine Schmelze-Massefließrate $MFI_1$ und respektive $MFI_2$ aufweisen mit $MFI_1 < MFI_2$ und $0,3 \leq 2|MFI_1 - MFI_2|/(MFI_1 + MFI_2) \leq 2,0$ ;

- der erste und zweite polymere Werkstoff eine Schmelze-Massefließrate $MFI_1$ und respektive $MFI_2$ aufweisen mit $MFI_1 < MFI_2$ und $0,4 \leq 2|MFI_1 - MFI_2|/(MFI_1 + MFI_2) \leq 2,0$ ;

- der erste und zweite polymere Werkstoff eine Schmelze-Massefließrate $MFI_1$ und respektive $MFI_2$ aufweisen mit $MFI_1 < MFI_2$ und $0,5 \leq 2|MFI_1 - MFI_2|/(MFI_1 + MFI_2) \leq 2,0$ ;

- der erste und zweite polymere Werkstoff eine Schmelze-Massefließrate $MFI_1$ und respektive $MFI_2$ aufweisen mit $MFI_1 < MFI_2$ und $0,6 \leq 2|MFI_1 - MFI_2|/(MFI_1 + MFI_2) \leq 2,0$ ;

- der erste und zweite polymere Werkstoff eine Schmelze-Massefließrate $MFI_1$ und respektive $MFI_2$ aufweisen mit $MFI_1 < MFI_2$ und $0,7 \leq 2|MFI_1 - MFI_2|/(MFI_1 + MFI_2) \leq 2,0$ ;

- der erste und zweite polymere Werkstoff eine Schmelze-Massefließrate $MFI_1$ und respektive $MFI_2$ aufweisen mit $MFI_1 < MFI_2$ und $0,8 \leq 2|MFI_1 - MFI_2|/(MFI_1 + MFI_2) \leq 2,0$ ;

- der erste polymere Werkstoff eine Schmelze-Massefließrate $MFI_1$ im Bereich von 1 bis 150 g/10 min aufweist;

- der erste polymere Werkstoff eine Schmelze-Massefließrate $MFI_1$ im Bereich von 10 bis 150 g/10 min aufweist;

- der erste polymere Werkstoff eine Schmelze-Massefließrate $MFI_1$ im Bereich von 20 bis 150 g/10 min aufweist;

- der erste polymere Werkstoff eine Schmelze-Massefließrate $MFI_1$ im Bereich von 30 bis 150 g/10 min aufweist;

- der erste polymere Werkstoff eine Schmelze-Massefließrate $MFI_1$ im Bereich von 40 bis 150 g/10 min aufweist;

- der erste polymere Werkstoff eine Schmelze-Massefließrate $MFI_1$ im Bereich von 50 bis 150 g/10 min aufweist;

- der erste polymere Werkstoff eine Schmelze-Massefließrate $MFI_1$ im Bereich von 50 bis 100 g/10 min aufweist;

- der zweite polymere Werkstoff eine Schmelze-Massefließrate $MFI_2$ im Bereich von 1 bis 150 g/10 min aufweist;

- der zweite polymere Werkstoff eine Schmelze-Massefließrate $MFI_2$ im Bereich von 1 bis 100 g/10 min aufweist;

- der zweite polymere Werkstoff eine Schmelze-Massefließrate $MFI_2$ im Bereich von 1 bis 50 g/10 min aufweist;

- der zweite polymere Werkstoff eine Schmelze-Massefließrate $MFI_2$ im Bereich von 1 bis 40 g/10 min aufweist;

- der zweite polymere Werkstoff eine Schmelze-Massefließrate $MFI_2$ im Bereich von 1 bis 30 g/10 min aufweist;

- der zweite polymere Werkstoff eine Schmelze-Massefließrate $MFI_2$ im Bereich von 1 bis 20 g/10 min aufweist;

- der zweite polymere Werkstoff eine Schmelze-Massefließrate $MFI_2$ im Bereich von 1 bis 10 g/10 min aufweist;

- der zweite polymere Werkstoff eine Schmelze-Massefließrate $MFI_2$ im Bereich von 4 bis 8 g/10 min aufweist;

- in Schritt (c) der erste und zweite polymere Werkstoff dem Extruder oder Knetaggregat in einem Volumenverhältnis von 100:0,5 bis 100:10, 100:0,5 bis 100:8, 100:0,5 bis 100:6 oder 100:0,5 bis 100:4 zugeführt werden;

- ein dritter polymerer Werkstoff mit Schmelze-Massefließrate $MFI_3$ bereitgestellt und in Schritt (c) dem Extruder oder Knetaggregat in einem Volumenverhältnis von 100:0,5 bis 100:15, bezogen auf den ersten polymeren Werkstoff zugeführt wird, wobei $0,2 \leq 2|MFI_1 - MFI_3|/(MFI_1 + MFI_3) \leq 2,0$ ist;

- in Schritt (c) der dritte polymere Werkstoff dem Extruder oder Knetaggregat in einem Volumenverhältnis von 100:0,5 bis 100:10, 100:0,5 bis 100:8, 100:0,5 bis 100:6 oder 100:0,5 bis 100:4, bezogen auf den ersten polymeren Werkstoff,zugeführt wird;

- der erste, zweite und/oder dritte polymere Werkstoff jeweils zwei oder mehr Bestandteile bzw. Komponenten umfasst und zwei oder mehr Bestandteile bzw. Komponenten des ersten, zweiten und/oder dritten polymeren Werkstoffs in einem separaten Vorlagebehälter bereitgestellt und aus dem jeweiligen Vorlagebehälter dem Extruder oder Knetaggregat zugeführt wird;

- ein oder mehreren weiteren Extrudern oder Knetaggregaten weitere polymere Werkstoffe zugeführt, die weiteren polymeren Werkstoffe in dem jeweiligen Extruder oder Knetaggregat plastifiziert und in Schritt (e) mit der den ersten und zweiten polymeren Werkstoff umfassenden Lage koextrudiert werden, derart dass eine zwei- oder mehrlagige Folie geformt wird;

- der erste und dritte polymere Werkstoff eine Schmelze-Massefließrate $MFI_1$ und respektive $MFI_3$ aufweisen mit $0,3 \leq 2|MFI_1 - MFI_3|/(MFI_1 + MFI_3) \leq 2,0$ ;

- der erste und dritte polymere Werkstoff eine Schmelze-Massefließrate $MFI_1$ und respektive $MFI_3$ aufweisen mit $0,4 \leq 2|MFI_1 - MFI_3|/(MFI_1 + MFI_3) \leq 2,0$ ;

- der erste und dritte polymere Werkstoff eine Schmelze-Massefließrate $MFI_1$ und respektive $MFI_3$ aufweisen mit $0,5 \leq 2|MFI_1 - MFI_3|/(MFI_1 + MFI_3) \leq 2,0$ ;

- der erste und dritte polymere Werkstoff eine Schmelze-Massefließrate $MFI_1$ und respektive $MFI_3$ aufweisen mit $0,6 \leq 2|MFI_1 - MFI_3|/(MFI_1 + MFI_3) \leq 2,0$ ;

- der erste und dritte polymere Werkstoff eine Schmelze-Massefließrate $MFI_1$ und respektive $MFI_3$ aufweisen mit $0,7 \leq 2|MFI_1 - MFI_3|/(MFI_1 + MFI_3) \leq 2,0$ ;

- der erste und dritte polymere Werkstoff eine Schmelze-Massefließrate $MFI_1$ und respektive $MFI_3$ aufweisen mit $0,8 \leq 2|MFI_1 - MFI_3|/(MFI_1 + MFI_3) \leq 2,0$ ;

- der erste und dritte polymere Werkstoff eine Schmelze-Massefließrate $MFI_1$ und respektive $MFI_3$ aufweisen mit $MFI_1 < MFI_3$ und $0,2 \leq 2|MFI_1 - MFI_3|/(MFI_1 + MFI_3) \leq 2,0$ ;

- der erste und dritte polymere Werkstoff eine Schmelze-Massefließrate $MFI_1$ und respektive $MFI_3$ aufweisen mit $MFI_1 < MFI_3$ und $0,3 \leq 2|MFI_1 - MFI_3|/(MFI_1 + MFI_3) \leq 2,0$ ;

- der erste und dritte polymere Werkstoff eine Schmelze-Massefließrate $MFI_1$ und respektive $MFI_3$ aufweisen mit $MFI_1 < MFI_3$ und $0,4 \leq 2|MFI_1 - MFI_3|/(MFI_1 + MFI_3) \leq 2,0$ ;

- der erste und dritte polymere Werkstoff eine Schmelze-Massefließrate $MFI_1$ und respektive $MFI_3$ aufweisen mit $MFI_1 < MFI_3$ und $0,5 \leq 2|MFI_1 - MFI_3|/(MFI_1 + MFI_3) \leq 2,0$ ;

- der erste und dritte polymere Werkstoff eine Schmelze-Massefließrate $MFI_1$ und respektive $MFI_3$ aufweisen mit $MFI_1 < MFI_3$ und $0,6 \leq 2|MFI_1 - MFI_3|/(MFI_1 + MFI_3) \leq 2,0$ ;

- der erste und dritte polymere Werkstoff eine Schmelze-Massefließrate $MFI_1$ und respektive $MFI_3$ aufweisen mit $MFI_1 < MFI_3$ und $0,7 \leq 2|MFI_1 - MFI_3|/(MFI_1 + MFI_3) \leq 2,0$ ;

- der erste und dritte polymere Werkstoff eine Schmelze-Massefließrate $MFI_1$ und respektive $MFI_3$ aufweisen mit $MFI_1 < MFI_3$ und $0,8 \leq 2|MFI_1 - MFI_3|/(MFI_1 + MFI_3) \leq 2,0$ ;

- der erste und dritte polymere Werkstoff eine Schmelze-Massefließrate $MFI_1$ und respektive $MFI_3$ aufweisen mit $MFI_1 > MFI_3$ und $0,2 \leq 2|MFI_1 - MFI_3|/(MFI_1 + MFI_3) \leq 2,0$ ;

- der erste und dritte polymere Werkstoff eine Schmelze-Massefließrate $MFI_1$ und respektive $MFI_3$ aufweisen mit $MFI_1 > MFI_3$ und $0,3 \leq 2|MFI_1 - MFI_3|/(MFI_1 + MFI_3) \leq 2,0$ ;

- der erste und dritte polymere Werkstoff eine Schmelze-Massefließrate $MFI_1$ und respektive $MFI_3$ aufweisen mit $MFI_1 > MFI_3$ und $0,4 \leq 2|MFI_1 - MFI_3|/(MFI_1 + MFI_3) \leq 2,0$ ;

- der erste und dritte polymere Werkstoff eine Schmelze-Massefließrate $MFI_1$ und respektive $MFI_3$ aufweisen mit $MFI_1 > MFI_3$ und $0,5 \leq 2|MFI_1 - MFI_3|/(MFI_1 + MFI_3) \leq 2,0$ ;

- der erste und dritte polymere Werkstoff eine Schmelze-Massefließrate $MFI_1$ und respektive $MFI_3$ aufweisen mit $MFI_1 > MFI_3$ und $0,6 \leq 2 |MFI_1 - MFI_3|/(MFI_1 + MFI_3) \leq 2,0$ ;

- der erste und dritte polymere Werkstoff eine Schmelze-Massefließrate $MFI_1$ und respektive $MFI_3$ aufweisen mit $MFI_1 > MFI_3$ und $0,7 \leq 2 |MFI_1 - MFI_3| / (MFI_1 + MFI_3) \leq 2,0$ ;

- der erste und dritte polymere Werkstoff eine Schmelze-Massefließrate $MFI_1$ und respektive $MFI_3$ aufweisen mit $MFI_1 > MFI_3$ und $0,8 \leq 2 | MFI_1 - MFI_3|/(MFI_1 + MFI_3) \leq 2,0$ ;

- der zweite und dritte polymere Werkstoff eine Schmelze-Massefließrate $MFI_2$ und respektive $MFI_3$ aufweisen mit $0,3 \leq 2 |MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $0,4 \leq 2 |MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $0,5 \leq 2 |MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $0,6 \leq 2 |MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $0,7 \leq 2 |MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $0,8 \leq 2 |MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit

$MFI_2 < MFI_3$ und $0,2 \leq 2 |MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $MFI_2 < MFI_3$ und $0,3 \leq 2 |MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $MFI_2 < MFI_3$ und $0,4 \leq 2 |MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $MFI_2 < MFI_3$ und $0,5 \leq 2 |MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $MFI_2 < MFI_3$ und $0,6 \leq 2 |MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $MFI_2 < MFI_3$ und $0,7 \leq 2 |MFI_2 - MFI_3|/(MFI_2 + MFI_3) \leq 2,0$ ;

- der zweite und dritte polymere Werkstoff eine Schmelze-Massefließrate $MFI_2$ und respektive $MFI_3$ aufweisen mit $MFI_2 < MFI_3$ und $0,8 \leq 2 |MFI_2 - MFI_3|/(MFI_2 + MFI_3) \leq 2,0$ ;

- der dritte polymere Werkstoff eine Schmelze-Massefließrate $MFI_3$ im Bereich von 1 bis 150 g/10 min aufweist;

- der dritte polymere Werkstoff eine Schmelze-Massefließrate $MFI_3$ im Bereich von 10 bis 150 g/10 min aufweist;

- der dritte polymere Werkstoff eine Schmelze-Massefließrate $MFI_3$ im Bereich von 20 bis 150 g/10 min aufweist;

- der dritte polymere Werkstoff eine Schmelze-Massefließrate $MFI_3$ im Bereich von 30 bis 150 g/10 min aufweist;

- der dritte polymere Werkstoff eine Schmelze-Massefließrate $MFI_3$ im Bereich von 40 bis 150 g/10 min aufweist;

- der dritte polymere Werkstoff eine Schmelze-Massefließrate $MFI_3$ im Bereich von 50 bis 150 g/10 min aufweist;

- der dritte polymere Werkstoff eine Schmelze-Massefließrate $MFI_3$ im Bereich von 50 bis 100 g/10 min aufweist;

- der erste polymere Werkstoff transparent ist;

- der zweite polymere Werkstoff transparent ist;

- der zweite polymere Werkstoff einen oder mehrere Farbstoffe oder Farbpigmente enthält;

- der zweite polymere Werkstoff einen braunen Farbstoff oder braune Farbpigmente enthält;

- der zweite polymere Werkstoff einen weißen Farbstoff oder weiße Farbpigmente enthält;

- der zweite polymere Werkstoff Partikel aus einem mineralischen Werkstoff, wie beispielsweise Glimmer enthält;

- der zweite polymere Werkstoff Partikel aus einem metallischen Werkstoff, wie beispielsweise Aluminium enthält;

- der erste polymere Werkstoff einen oder mehrere Farbstoffe oder Farbpigmente enthält;

- der erste polymere Werkstoff einen braunen Farbstoff oder braune Farbpigmente enthält;

- der erste polymere Werkstoff einen weißen Farbstoff oder weiße Farbpigmente enthält;

- der erste polymere Werkstoff Partikel aus einem mineralischen Werkstoff, wie beispielsweise Glimmer enthält;

- der erste polymere Werkstoff Partikel aus einem metallischen Werkstoff, wie beispielsweise Aluminium enthält;

- der erste polymere Werkstoff transparent ist und der zweite polymere Werkstoff einen oder mehrere Farbstoffe oder Farbpigmente enthält;

- der zweite polymere Werkstoff transparent ist und der erste polymere Werkstoff einen oder mehrere Farbstoffe oder Farbpigmente enthält;

- der erste und zweite polymere Werkstoff jeweils einen oder mehrere Farbstoffe oder Farbpigmente enthält, wobei die Farbstoffe oder Farbpigmente des ersten und zweiten polymeren Werkstoffes voneinander verschiedene Farben haben und/oder in unterschiedlichen Konzentrationen in dem ersten und zweiten polymeren Werkstoff enthalten sind;

- der erste und zweite polymere Werkstoff transparent ist und der erste polymere Werkstoff transparente Pigmente enthält, die einen von dem ersten polymeren Werkstoff verschiedenen Brechungsindex haben;

- der erste und zweite polymere Werkstoff transparent ist und der zweite polymere Werkstoff transparente Pigmente enthält, die einen von dem ersten polymeren Werkstoff verschiedenen Brechungsindex haben;

- der dritte polymere Werkstoff einen oder mehrere Farbstoffe oder Farbpigmente enthält;

- der dritte polymere Werkstoff einen braunen Farbstoff oder braune Farbpigmente enthält;

- der dritte polymere Werkstoff einen weißen Farbstoff oder weiße Farbpigmente enthält;

- der dritte polymere Werkstoff Partikel aus einem mineralischen Werkstoff, wie beispielsweise Glimmer enthält;

- der dritte polymere Werkstoff Partikel aus einem metallischen Werkstoff, wie beispielsweise Aluminium enthält;

- die Folie eine oder mehrere Kernlagen, Zwischenlagen oder Decklagen aus einem oder mehreren polymeren Werkstoffen umfasst, die unabhängig voneinander, bezogen auf ihr jeweiliges Gesamtgewicht aus 60 bis 99 Gew.-% eines oder mehrerer Polymere und 1 bis 40 Gew.-% eines oder mehrerer Additive bestehen;

- die Folie eine oder mehrere Kernlagen, Zwischenlagen oder Decklagen aus einem oder mehreren polymeren Werkstoffen umfasst, die unabhängig voneinander, bezogen auf ihr jeweiliges Gesamtgewicht aus 60 bis 99 Gew.-% eines oder mehrerer Polymere und 1 bis 40 Gew.-% eines oder mehrerer Additive bestehen, wobei die Additive gewählt sind aus Verarbeitungshilfsmitteln, thermischen Stabilisatoren, Gleitmitteln, polymeren Modifikatoren, Schäumungsmitteln, Mattierungsmitteln, anorganischen Füllstoffen, Farbstoffen- und -pigmenten, Fungiziden, UV-Stabilisatoren, Brandschutzmitteln und Duftstoffen;

- der erste, zweite und/oder dritte polymere Werkstoff unabhängig voneinander, bezogen auf ihr jeweiliges Gesamtgewicht aus 60 bis 99 Gew.-% eines oder mehrerer Polymere und 1 bis 40 Gew.-% eines oder mehrerer Additive besteht;

- der erste, zweite und/oder dritte polymere Werkstoff unabhängig voneinander ein Polyolefin enthält;

- der erste, zweite und/oder dritte polymere Werkstoff unabhängig voneinander ein oder mehrere Vinylchloridpolymerisate enthält;

- der erste, zweite und/oder dritte polymere Werkstoff unabhängig voneinander einen halbkristallinen oder amorphen Polyester enthält;

- der erste, zweite und/oder dritte polymere Werkstoff unabhängig voneinander Polyethylenterephthalat des Typs APET, PETP oder PETG enthält;

- der erste, zweite und/oder dritte polymere Werkstoff unabhängig voneinander Polypropylen enthält;

- der erste, zweite und/oder dritte polymere Werkstoff unabhängig voneinander Polystyrol enthält;

- der erste, zweite und/oder dritte polymere Werkstoff unabhängig voneinander Acrylbutadienstyrol (ABS) enthält;

- der erste, zweite und/oder dritte polymere Werkstoff unabhängig voneinander ein oder mehrere Additive enthält, die gewählt sind aus Verarbeitungshilfsmitteln, thermischen Stabilisatoren, Gleitmitteln, polymeren Modifikatoren, Schäumungsmitteln, Mattierungsmitteln, anorganischen Füllstoffen, Farbstoffen- und -pigmenten, Fungiziden, UV-Stabilisatoren, Brandschutzmitteln und Duftstoffen;

- der erste, zweite und/oder dritte polymere Werkstoff unabhängig voneinander ein oder mehrere anorganische Füllstoffe, gewählt aus Kreide, Talk, Glimmer, Tonerde, Kaolin, Silikaten und Titanoxid enthält;

- der erste, zweite und/oder dritte polymere Werkstoff unabhängig voneinander ein oder mehrere Gleitmittel, gewählt aus Wachsen, Fetten, Paraffinen, epoxidiertem Sojaöl und Polymerisaten auf Basis von Acrylatestern enthält; und/oder

- der erste, zweite und/oder dritte polymere Werkstoff unabhängig voneinander einen oder mehrere polymere Modifikatoren, gewählt aus Polymerisaten auf Basis von Acrylat, Butyl-Methacrylat, Methacrylat-Butyl-Styrol, Methylmethacrylat-Butadien-Styrol und chloriertem Polyethylen enthält.

Im Weiteren betrifft die Erfindung eine ein- oder mehrlagige Folie, die nach einem der vorstehend beschriebenen Verfahren hergestellt ist.

Im Weiteren betrifft die Erfindung Artikel, wie beispielsweise Schalen, Becher und Blisterpackungen die aus einer der vorstehend beschriebenen Folien durch Thermoformen hergestellt sind.

Bei ein- und mehrlagigen Folien stellt die Homogenität der einen oder mehreren Lagen ein bedeutendes Qualitätskriterium dar. Schon geringe strukturelle, farbliche oder sonstige optische Schwankungen in einer Folienlage sind unerwünscht und führen dazu, dass die betreffende Folie bei der Qualitätskontrolle als Ausschuss eingestuft wird. Dementsprechend werden in der industriellen Folienfertigung diverse Maßnahmen ergriffen, um Folien mit möglichst homogenen strukturellen und optischen Eigenschaften zu erhalten. Zu diesen Maßnahmen gehören beispielsweise:

- Abgleich der rheologischen Eigenschaften der polymeren Werkstoffe, um eine gute Vermischung der Materialien in einem, für die Plastifizierung eingesetzten Extruder oder Knetaggregat zu gewährleisten;

- mechanische Filterung der plastifizierten Werkstoffe um Gelpartikel mit erhöhter Vikosität zurückzuhalten; und

- präzise Dosierung von Farbstoffen mittels eines elektronischen Regelkreises in Verbindung mit einem Farbspektrometer.

Die Erfinder der vorliegenden Erfindung haben überraschenderweise gefunden, dass es möglich ist, durch die Verwendung von zwei oder mehreren nicht bzw. schlecht mischbaren polymeren Werkstoffen eine Folie bzw. eine Folienlage mit einer visuell ansprechenden Textur herzustellen. Hierbei muss die Mischbarkeit der polymeren Werkstoffe und die Inhomogenität der daraus hergestellten Folie- oder Folienlage erheblich schlechter bzw. ausgeprägter sein im Vergleich zu den, in der etablierten Folienherstellung eingesetzten Werkstoffkombinationen und der damit erzielten geringen Varianz der physikalischen Produkteigenschaften. Um die erfindungsgemäßen Textureffekte zu erhalten, bedarf es einer ausgeprägten Mischungsinkompatibilität bzw. Mischungslücke der verwendeten polymeren Werkstoffe, die eine gezielte Einstellung der rheologischen Eigenschaften erfordert.

In der vorliegenden Erfindung bezeichnet der Begriff "erster polymerer Werkstoff", "zweiter polymerer Werkstoff" und "dritter polymerer Werkstoff" jeweils einen polymeren Werkstoff der eine oder mehrere Polymere und ein oder mehrere Additive umfasst und der bei Plastifizierung in einem Extruder oder in einem Knetaggregat eine im Wesentlichen homogene Mischung bzw. homogene Phase bildet. Hierbei ist es zweckmäßig, jedoch nicht zwingend erforderlich, dass die einzelnen Bestandteile bzw. Komponenten des ersten, zweiten und dritten polymeren Werkstoffes vor der Einbringung in einen für die Plastifizierung verwendeten Extruder oder Knetaggregat miteinander vermischt sind. Vielmehr können die Bestandteile bzw. Komponenten des ersten, zweiten und/oder dritten polymeren Werkstoffes aus zwei oder mehr als zwei separaten Vorlagebehältern (Hoppern) in den Extruder oder das Knetaggregat dosiert werden. Damit der erste, zweite und dritte polymere Werkstoff bei der Plastifizierung in einem Extruder oder Knetaggregat jeweils eine homogenen Mischung bzw. Phase bilden, müssen die plastifizierbaren Bestandteile und insbesondere die polymeren Komponenten des ersten, zweiten und dritten polymeren Werkstoffes jeweils ähnliche rheologische Eigenschaften bzw. eine vergleichbare Schmelze-Massefließrate aufweisen. Hierbei ist es unerheblich, ob die Bestandteile des ersten, zweiten und dritten polymeren Werkstoffes vor der Dosierung in einen Extruder oder ein Knetaggregat miteinander vermischt vorliegen oder aus separaten Vorlagebehältern (Hoppern) zugeführt werden.

In der vorliegenden Erfindung bezeichnet der Begriff "Maschinenrichtung" oder "Längsrichtung" die Transport-bzw. Wickelrichtung des für die Herstellung der Folie verwandten Extruders oder Kalanders. Dementsprechend bezeichnet der Begriff "Transversalrichtung" eine zur Maschinenrichtung senkrechte Richtung.

In der vorliegenden Erfindung bezeichnet der Begriff "Volumenverhältnis der Schlieren zur Matrix" ein anhand des Massenverhältnis $M_2/M_1$ des zweiten polymeren Werkstoffs, bezogen auf den ersten polymeren Werkstoff berechnetes Volumenverhältnis $V_2/V_1$. Bei der Berechnung des Volumenverhältnis $V_2/V_1$ werden die Dichte $\rho_1$ und $\rho_2$ des ersten und, respektive zweiten polymeren Werkstoffs berücksichtigt gemäß der Beziehung

$$\frac{V_2}{V_1} = \frac{M_2}{M_1} \cdot \frac{\rho_1}{\rho_2} \qquad \textbf{(I)}$$

Die erfindungsgemäße Folie und die mindestens eine, Schlieren enthaltende Dekorlage besteht aus Werkstoffen, die ein oder mehrere Polymere umfassen, die vorzugsweise aus Vinylchloridpolymerisaten, halbkristallinen oder amorphen Polyestern, Polyolefinen, Polypropylen, Polystyrol und Acrylbutadienstyrol (ABS) gewählt sind.

In der vorliegenden Erfindung bezeichnet der Begriff "Vinylchloridpolymerisat" Vinylchlorid-Homopolymerisate, Vinylchlorid-Copolymerisate sowie Mischungen der vorstehenden Polymerisate. Insbesondere umfasst der Begriff "Vinylchloridpolymerisat"

- durch Homopolymerisation von Vinylchlorid erzeugte Polyvinylchloride (PVC), und

- Vinylchlorid-Copolymerisate, die durch Polymerisation von Vinylchlorid mit einem oder mehreren Comonomeren, wie Ethylen, Propylen oder Vinylacetat gebildet werden.

Als halbkristalliner oder amorpher Polyester wird vorzugsweise PETP, APET, glykolmodifiziertes Polyethylenterephthalat (PETG) oder säuremodifiziertes Polyethylenterephthalat verwendet. Ein Polyester des Typs PETP wird beispielsweise von der Firma Indorama Corp. unter der Produktbezeichnung RAMAPET N180 angeboten. Ein Polyester des Typs APET wird beispielsweise von der Firma Invista S.à r.l. unter der Produktbezeichnung Polyclear® 1101 angeboten. In dem amorphen glykolmodifizierten Polyethylenterephthalat (PETG) sind vorzugsweise Glykol-Einheiten durch 1,4-Cyclohexandimethanol-Einheiten ersetzt. Ein derartiges mit 1,4-Cyclohexandimethanol modifiziertes Polyethylenterephthalat wird kommerziell angeboten von Eastman Chemical Company (Tennessee, USA) unter der Produktbezeichnung Eastar Copolyester 6763.

In einer anderen zweckmäßigen Ausführungsform der Erfindung wird ein halbkristalliner oder amorpher Polyester mit einer Kristallisations-Halbwertszeit von mindestens 5 Minuten eingesetzt. Ein derartiger Copolyester ist beispielsweise in dem Patent EP 1 066 339 B1 der Eastman Chemical Company beschrieben. Dieser Copolyester ist aus (i) Disäurerestkomponenten und (ii) Diolrestkomponenten aufgebaut. Die Disäurerestkomponenten (i) umfassen mindestens 80 Mol-% einer Disäurerestkomponente gewählt aus Terephthalsäure, Naphthalindicarbonsäure, 1,4-Cyclohexandicarbonsäure, Isophthalsäure und Mischungen davon, bezogen auf alle in dem Copolyester enthaltenen Disäurerestkomponenten (= 100 mol-%). Die Diolrestkomponenten (ii) umfassen 80 bis 100 Mol-% einer Diolrestkomponente, gewählt aus Diolen mit 2 bis 10 Kohlenstoffatomen und Mischungen davon und 0 bis 20 Mol-% eines modifizierenden Diols, gewählt aus 1,3-Propandiol, 1,4-Butandiol, 1,5-Pentandiol, 1,6-Hexandiol, 1,8-Octandiol, 2,2,4-Trimethyl-1,3-Pentandiol, Propylenglycol, 2,2,4,4-Tetramethyl-1,3-Cyclobutandiol, bezogen auf alle in dem Copolyester enthaltenen Diolreste (= 100 mol-%). Amorphe oder halbkristalline Copolyester mit einer Kristallisations-Halbwertszeit von mindestens 5 Minuten eignen sich gut für herkömmliche Kalandrierverfahren. Mit einem polymeren Werkstoff, der einen wesentlichen Anteil - in der Regel mehr als 50 Gew.-% - an halbkristallinem oder amorphem Copolyester mit einer Kristallisations-Halbwertszeit von mindestens 5 Minuten enthält, können durch Kalandrieren homogene und praktisch defektfreie Folien erzeugt werden.

Amorphe oder halbkristalline Polyester mit einer Kristallisations-Halbwertszeit von mindestens 5 Minuten werden unter anderem von Eastman Chemical Company unter der Produktbezeichnung Cadence Copolyester kommerziell angeboten. Diese Copolyester werden als Hauptkomponente für die Herstellung von Polyesterfolien eingesetzt, wobei ihr Anteil am Gesamtgewicht der Polyesterfolie in der Regel mehr als 40 bis 70 Gew.-%, beträgt.

Die Kristallisations-Halbwertszeit der für die Folie verwendeten Copolyester wird mithilfe eines dynamischen Differenzkalorimeters (Differential Scanning Calorimeter bzw. DSC) bestimmt. Die dynamische Differenzkalorimetrie (DSC) ist eine Standardmethode für die Messung der thermischen Eigenschaften, insbesondere der Phasenübergangstemperaturen von Festkörpern. In der vorliegenden Erfindung wird die Kristallisationshalbwertszeit ermittelt, indem 15 mg des zu messenden Copolyesters auf 290 °C erwärmt, hieran anschließend in Gegenwart von Helium mit einer Rate von 320 °C pro Minute auf eine vorgegebene Temperatur von 180 bis 210 °C gekühlt und die Zeitspanne bis zum Erreichen der isothermen Kristallisationstemperatur bzw. des Kristallisationspeaks der DSC-Kurve detektiert. Anhand des zeitabhängigen Verlaufs der Kristallisation wird die Kristallisationshalbwertszeit bestimmt. Die Kristallisationshalbwertszeit entspricht der Zeit, die bei der vorgegebenen Temperatur von 180 bis 210 °C nach der Initialphase der Kristallisation benötigt wird, um in der Probe 50 % der maximal erreichbaren Kristallinität zu erhalten.

In der vorliegenden Erfindung bezeichnet der Begriff "Folie" vereinzelte Stücke einer Folie mit Abmessungen von 0,1 bis 1 m sowie industriell hergestellte Folienbahnen mit Längen von mehreren Hundert bis zu einigen Tausend Metern.

Die optische Textur bzw. das Muster der mindestens einen, Schlieren enthaltenden Dekorlage der erfindungsgemäßen Folien ist für das menschliche Auge ohne Weiteres erkennbar und sticht einem Betrachter sofort ins Auge. Qualitativ ist die optische Textur beschreibbar als Vielzahl streifenförmiger, parallel zur Maschinenrichtung verlaufender Schlieren mit unregelmäßig schwankender Breite und verwaschenen Rändern. Von einer überwiegenden Mehrheit der Betrachter wird die optische Textur als holzartiges Dekor beurteilt.

Ungeachtet ihrer guten visuellen Wahrnehmbarkeit ist aufgrund fließender Farbübergänge und der entlang der Maschinenrichtung zufällig variierenden Streifenbreite eine exakte mathematische Beschreibung der optischen Textur nicht möglich. Daher wird die optische Textur der erfindungsgemäßen Folien ergänzend mittels statistischer Methoden beschrieben. Hierzu wird zum einen die Streuung bzw. Standardabweichung der Luminanz bzw. Helligkeit in Transversal- und Maschinenrichtung und zum anderen die Direktionalität bzw. die statistische Verteilung des Luminanz- bzw. Grauwertgradienten der optischen Textur bestimmt. Die für die Charakterisierung der optischen Textur verwandten Methoden sind in einem nachfolgenden Abschnitt ausführlich beschrieben.

Nachfolgend wird die Erfindung anhand von Figuren näher erläutert. Es zeigen

Fig. 1    eine schematische Schnittansicht einer einlagige Folie;
Fig. 2    eine schematische Schnittansicht einer Schlieren enthaltenden Dekorlage der Folie;
Fig. 3    eine schematische Schnittansicht einer dreilagigen Folie mit zwei äußeren, Schlieren enthaltenden Dekorlagen;
Fig. 4    eine schematische Schnittansicht einer vierlagigen Folie mit zwei Schlieren enthaltenden Dekorlagen;
Fig. 5    ein erstes Beispiel einer Textur einer Folie;
Fig. 6    ein Diagramm der Direktionalität der in Fig. 5 gezeigten Textur;
Fig. 7    ein zweites Beispiel einer Textur einer Folie;
Fig. 8    ein Diagramm der Direktionalität der in Fig. 7 gezeigten Textur;
Fig. 9    ein drittes Beispiel einer Textur einer Folie;
Fig. 10   ein Diagramm der Direktionalität der in Fig. 9 gezeigten Textur;
Fig. 11   ein viertes Beispiel einer Textur einer Folie;
Fig. 12   ein Diagramm der Direktionalität der in Fig. 11 gezeigten Textur.

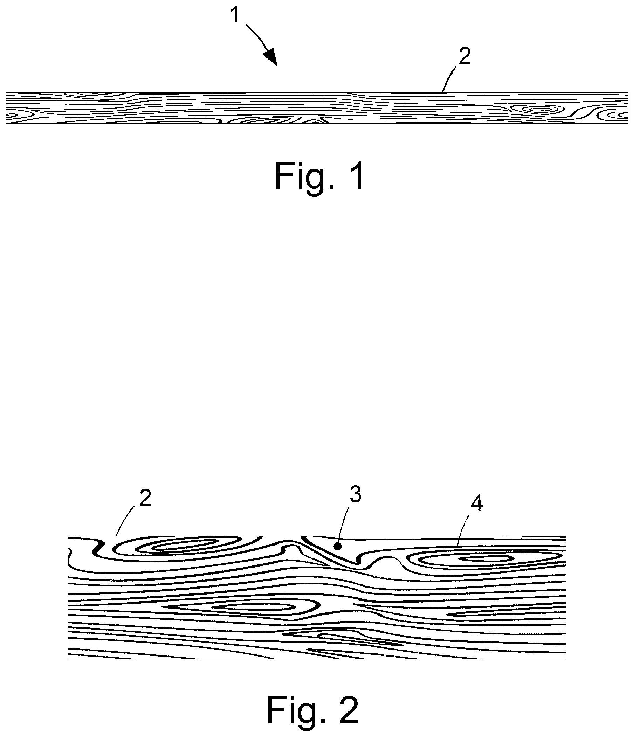

Fig. 1 zeigt eine schematische Schnittansicht einer erfindungsgemäßen einlagigen Folie 1 mit einer Schlieren enthaltenden Dekorlage 2.

Fig. 2 zeigt eine schematische Detailansicht der Schlieren enthaltenden Dekorlage 2 mit einer Matrix 3 aus einem ersten polymeren Werkstoff und in die Matrix 3 eingebetteten Schlieren 4 aus einem zweiten polymeren Werkstoff.

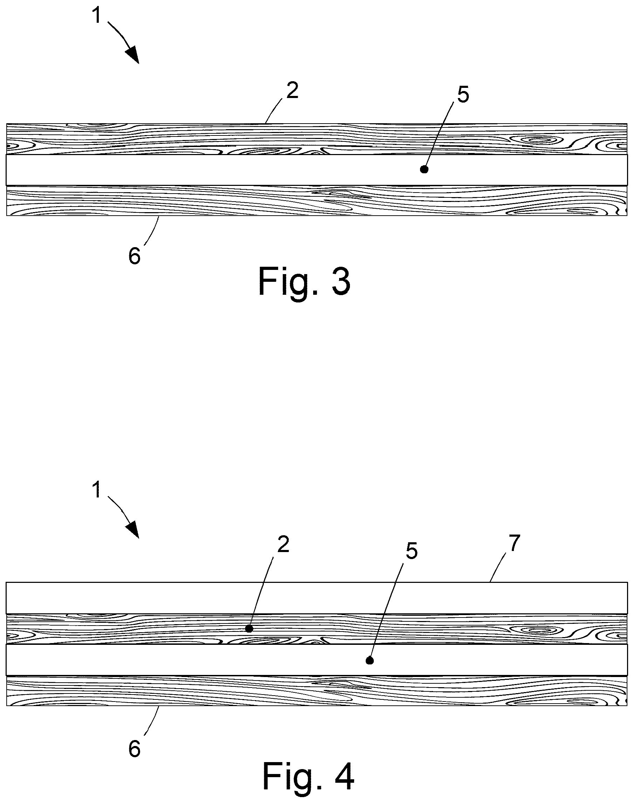

Fig. 3 zeigt eine schematische Schnittansicht einer erfindungsgemäßen dreilagigen Folie 1 mit einer Trägerlage 5 und einer ersten und zweiten, Schlieren enthaltenden Dekorlage 2 und 6. Die Trägerlage 5 ist zwischen der ersten und zweiten, Schlieren enthaltenden Dekorlage 2 und 6 angeordnet. Die erste und zweite, Schlieren enthaltende Dekorlage 2 und 6 bilden jeweils eine Außenseite der Folie 1 und sind somit sichtbar.

In einer vorteilhaften Ausführungsform sind die polymeren Werkstoffe, aus denen die erste und zweite Schlieren enthaltende Dekorlage 2 und 6 bestehen, voneinander verschieden. Insbesondere unterscheiden sich die in der Dekorlage 2 und 6 enthaltenen Farbstoffe oder Farbpigmente voneinander.

In einer weiteren zweckmäßigen Ausführungsform sind einige oder sämtliche polymeren Werkstoffe, aus denen die erste und zweite, Schlieren enthaltende Dekorlage 2 und 6 bestehen, gleich.

In einer bevorzugten Ausführungsform ist die Kernlage 5 opak. Insbesondere ist die Kernlage 5 farbig.

Fig. 4 zeigt eine schematische Schnittansicht einer erfindungsgemäßen vierlagigen Folie 1 mit einer Trägerlage 5, einer ersten und zweiten Schlieren enthaltenden Dekorlage 2 und 6 und einer transparenten Decklage 7. In einer vorteilhaften Ausführungsform des erfindungsgemäßen Verfahrens werden die Kernlage 5, die Dekorlagen 2 und 6 sowie die transparente Decklage 7 koextrudiert. In einer alternativen, ebenfalls vorteilhaften Ausführungsform des erfindungsgemäßen Verfahrens werden die Kernlage 5 und die Dekorlagen 2 und 6 koextrudiert und hieran anschließend die transparente Decklage 7 auf die Dekorlage 2 laminiert.

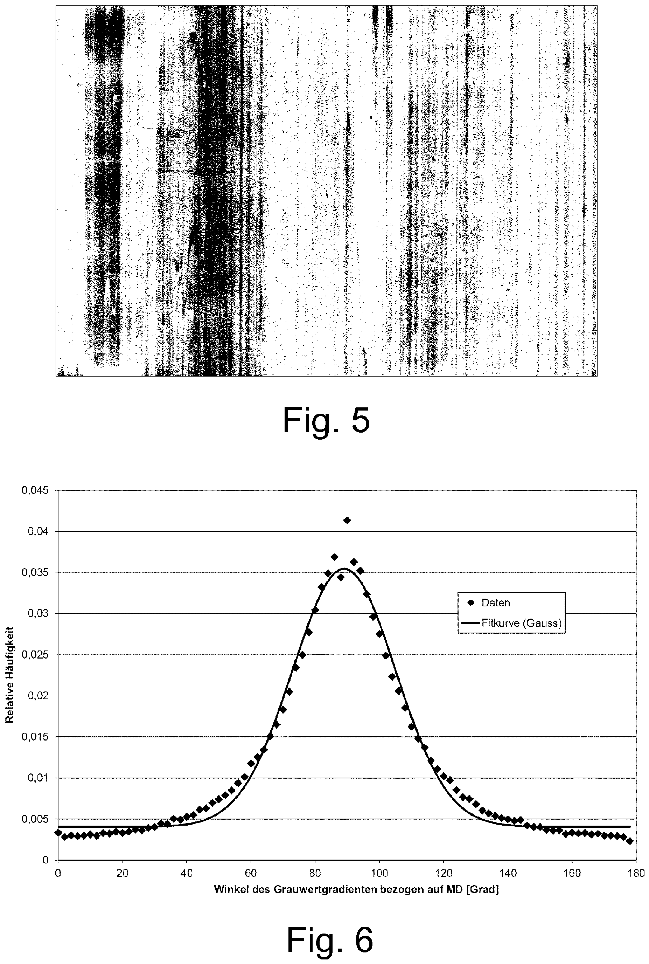

Fig. 5 zeigt ein erstes Beispiel einer Textur einer erfindungsgemäßen Folie (Beispiel 2B) mit streifenförmigen Schlieren, deren Längsachse im Wesentlichen parallel zu einer Maschinenrichtung MD der Folie ausgerichtet ist. In der Zeichenebene der Fig. 5 verläuft die Maschinenrichtung MD von unten nach oben (bzw. von oben nach unten).

Fig. 6 zeigt ein Diagramm mit Direktionalitätsdaten der in Fig. 5 gezeigten Textur. Die horizontale Abszissen-Achse des Diagramms zeigt den auf die Maschinenrichtung MD bezogenen Winkel des Grauwertgradienten in Inkrementen bzw. Intervallen mit einer Breite von 2 Grad. Die vertikale Ordinaten-Achse zeigt die Häufigkeit des jeweiligen Grauwertgradienten-Winkels in einem Intervall an. Aus dem Diagramm der Fig. 6 ist unmittelbar ersichtlich, dass ein erheblicher Anteil der Bildpunkte (Pixel) einen im Wesentlichen senkrecht zur Maschinenrichtung MD, d. h. in Transversalrichtung TD orientierten Grauwertgradienten hat.

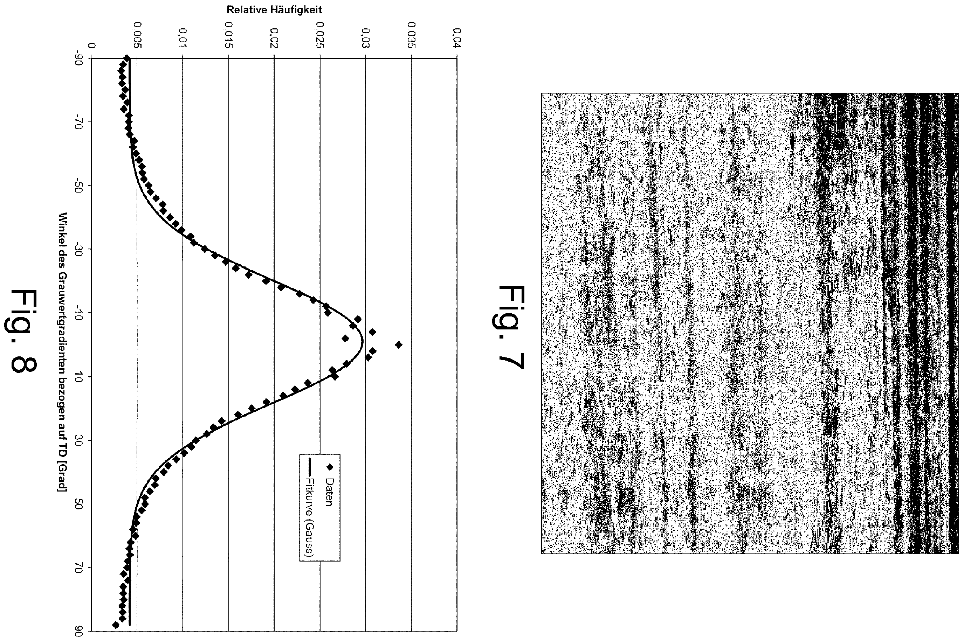

Fig. 7 zeigt ein zweites Beispiel einer Textur einer erfindungsgemäßen Folie (Beispiel 3A) mit streifenförmigen Schlieren, deren Längsachse im Wesentlichen parallel zu einer Maschinenrichtung MD der Folie ausgerichtet ist. In der Zeichenebene der Fig. 7 verläuft die Maschinenrichtung MD von links nach rechts (bzw. von rechts nach links).

Fig. 8 zeigt ein Diagramm mit Direktionalitätsdaten der in Fig. 7 gezeigten Textur. Die horizontale Abszissen-Achse des Diagramms zeigt den auf die Transversalrichtung TD bezogenen Winkel des Grauwertgradienten in Inkrementen bzw. Intervallen mit einer Breite von 2 Grad. Die vertikale Ordinaten-Achse zeigt die Häufigkeit des jeweiligen Grauwertgradienten-Winkels in einem Intervall an. Aus dem Diagramm der Fig. 8 ist unmittelbar ersichtlich, dass ein erheblicher Anteil der Bildpunkte (Pixel) einen im Wesentlichen in Transversalrichtung TD orientierten Grauwertgradienten hat.

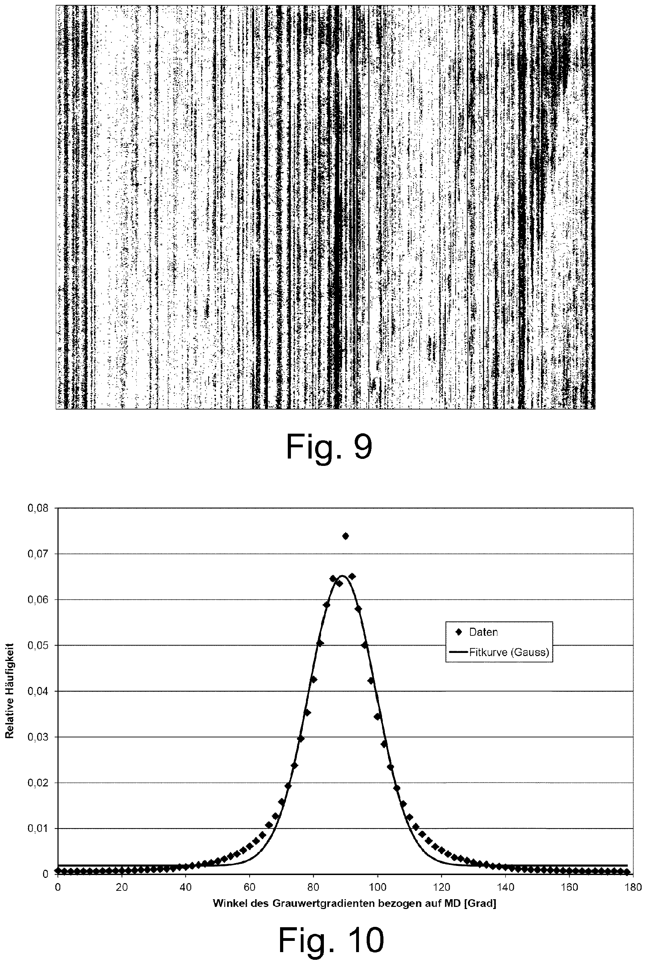

Fig. 9 zeigt ein drittes Beispiel einer Textur einer erfindungsgemäßen Folie (Beispiel 4A) mit streifenförmigen Schlieren, deren Längsachse im Wesentlichen parallel zu einer Maschinenrichtung MD der Folie ausgerichtet ist. In der Zeichenebene der Fig. 9 verläuft die Maschinenrichtung MD von unten nach oben (bzw. von oben nach unten).

Fig. 10 zeigt ein Diagramm mit Direktionalitätsdaten der in Fig. 9 gezeigten Textur. Die horizontale Abszissen-Achse des Diagramms zeigt den auf die Maschinenrichtung MD bezogenen Winkel des Grauwertgradienten in Inkrementen bzw. Intervallen mit einer Breite von 2 Grad. Die vertikale Ordinaten-Achse zeigt die Häufigkeit des jeweiligen Grauwertgradienten-Winkels in einem Intervall an. Aus dem Diagramm der Fig. 10 ist unmittelbar ersichtlich, dass ein erheblicher Anteil der Bildpunkte (Pixel) einen im Wesentlichen senkrecht zur Maschinenrichtung MD, d. h. in Transversalrichtung TD orientierten Grauwertgradienten hat.

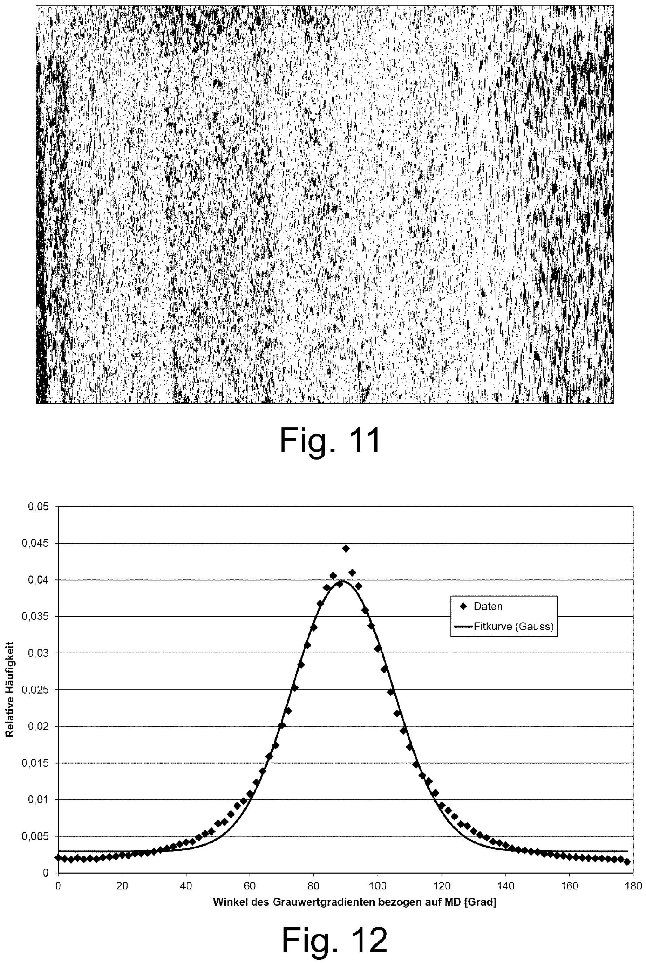

Fig. 11 zeigt ein viertes Beispiel einer Textur einer erfindungsgemäßen Folie (Beispiel 4B) mit streifenförmigen Schlieren, deren Längsachse im Wesentlichen parallel zu einer Maschinenrichtung MD der Folie ausgerichtet ist. In der Zeichenebene der Fig. 11 verläuft die Maschinenrichtung MD von unten nach oben (bzw. von oben nach unten).

Fig. 12 zeigt ein Diagramm mit Direktionalitätsdaten der in Fig. 11 gezeigten Textur. Die horizontale Abszissen-Achse des Diagramms zeigt den auf die Maschinenrichtung MD bezogenen Winkel des Grauwertgradienten in Inkrementen bzw. Intervallen mit einer Breite von 2 Grad. Die vertikale Ordinaten-Achse zeigt die Häufigkeit des jeweiligen Grauwertgradienten-Winkels in einem Intervall an. Aus dem Diagramm der Fig. 12 ist unmittelbar ersichtlich, dass ein erheblicher Anteil der Bildpunkte (Pixel) einen im Wesentlichen senkrecht zur Maschinenrichtung MD, d. h. in Transversalrichtung TD orientierten Grauwertgradienten hat.

In jedem der Diagramme der Fig. 6, 8, 10 und 12 ist zudem eine mittels nichtlinearer Regression an die Häufigkeitsverteilung des Grauwertgradienten-Winkels angepasste Normalverteilung bzw. Gausskurve gezeigt, die in der Legende der Diagramme auch als "Fitkurve" bezeichnet ist. Es ist ohne Weiteres ersichtlich, dass die angepasste Gausskurve die Häufigkeitsverteilung des Grauwertgradienten-Winkels gut approximiert. Das erfindungsgemäße Herstellungsverfahren unterliegt stochastischen Schwankungen, die sich in der gaussförmigen Häufigkeitsverteilung des Grauwertgradienten-Winkels manifestieren.

Beispiele

Mittels einer Koextrusionsanlage mit drei Extrudern wurden fünf jeweils dreilagige Folien nach dem erfindungsgemäßen Verfahren hergestellt. Jede der fünf Folien umfasst eine Kernlage und zwei, Schlieren enthaltende Dekorlagen, wobei die Kernlage zwischen den zwei Dekorlagen angeordnet ist. Die zwei Dekorlagen einer Folie sind jeweils voneinander verschieden. Dementsprechend sind die erfindungsgemäßen Beispiele unter Bezugnahme auf die Dekorlagen mit den Nummern 1A, 1B, 2A, 2B, 3A, 3B, 4A, 4B, 5A und 5B bezeichnet.

Als Basispolymer für die Kernlage wurde ein handelsüblicher Polyester des Typs PETP INDORAMA N180 mit einer intrinsischen Viskosität von 0,8 dl/g (0,8 Deziliter/g), entsprechend einer Schmelze-Massefließrate MFI ≈ 30 g/10 min eingesetzt. Der polymere Werkstoff für die beiden Dekorlagen besteht im Wesentlichen aus PETP und einem Mattierungsadditiv auf Basis von $CaCO_3$. Sowohl die Kernlage, wie auch jede der Dekorlagen umfasst zudem ein oder zwei handelsübliche Farb-Masterbatches auf Basis von Polyethylen. Kommerziell angebotene Farb-Masterbatches haben Schmelze-Massefließraten die je nach Typ und Polymerisationsgrad bzw. mittlerem Molekulargewicht des Basispolymers (vorliegend Polyethylen) in einem weiten Bereich von 1 bis 150 g/10 min variieren. Die Zusammensetzung der für die Erzeugung der erfindungsgemäßen Folienbeispiele eingesetzten Werkstoffe ist in Tabelle 1 wiedergegeben.

**Tabelle 1: Folienbeispiele**

| Beispiel Nr. | | 1A | 1B | 2A | 2B | 3A | 3B | 4A | 4B | 5A | 5B |
|---|---|---|---|---|---|---|---|---|---|---|---|
| Textur-Code | | 84RT006-1 | | 84RT006-2 | | 84RT009 | | 84RT010 | | 84RT011 | |

(fortgesetzt)

| Beispiel Nr. | | 1A | 1B | 2A | 2B | 3A | 3B | 4A | 4B | 5A | 5B |
|---|---|---|---|---|---|---|---|---|---|---|---|
| Gesamtdicke | | 436 µm | | 286 µm | | 395 µm | | 346 mm | | 800 µm | |
| Lagenaufbau und -dicke | | A / B /C 4 / 92 / 4 % | | A / B / C 6 / 88 / 6 % | | A / B / C 4 / 92 / 4 % | | A/B/C 4 / 92 / 4 % | | A / B / C 2,5 / 95 / 2,5 % | |
| | MFI [g/10 min] | Anteile [Gew.-%] | | Anteile [Gew.-%] | | Anteile [Gew.-%] | | Anteile [Gew.-%] | | Anteile [Gew.-%] | |
| **Kernlage B** | | | | | | | | | | | |
| PETP | 31 | 98 | | 97,2 | | 98 | | 98 | | 96,2 | |
| Farb-MB I | 45 | 2 | | 2,0 | | 2 | | 2 | | - | |
| Farb-MB II | 35 | - | | - | | - | | - | | 2,6 | |
| Schäumungs-MB* | - | - | | 0,8 | | - | | - | | 1,2 | |
| **Dekorlage**\*\* | | A | C | A | C | A | C | A | C | A | C |
| PETP | 31 | 49,0 | 49,0 | 49,0 | 49,0 | 49,0 | 49,0 | 49,0 | 49,0 | 53,0 | 94,0 |
| Mattierungs-MB*** PETP + CaCO$_3$ | 30 | 49,0 | 49,0 | 49,0 | 49,5 | 49,5 | 49,5 | 48,5 | 48,5 | 45,0 | - |
| Farb-MB 1 | 100 | - | - | - | - | 0,75 | 0,75 | 1,25 | 1,25 | - | - |
| Farb-MB 2 | 5 | - | - | - | - | 0,75 | 0,75 | 1,25 | 1,25 | - | - |
| Farb-MB 3 | 54 | 0,8 | 0,8 | 0,8 | - | - | - | - | - | 0,8 | - |
| Farb-MB 4 | 6 | 1,2 | 1,2 | 1,2 | - | - | - | - | - | 1,2 | - |
| Farb-MB 5 | 75 | - | - | - | 1,5 | - | - | - | - | - | - |
| Farb-MB 6 | 85 | - | - | - | - | - | - | - | - | - | 2,5 |
| Aufheller-MB | 30 | - | - | - | - | - | - | - | - | - | 3,5 |

MB = Masterbatch *Schäumungs-Masterbatch auf Basis von Zitronensäure **Dekorlagen A und C mit unterschiedlichen Extrusionsparametern hergestellt ***Mattierungs-Masterbatch aus 70 bis 75 Gew.-% PETP und 25 bis 30 Gew.-% CaCO$_3$

**Tabelle 2: Textur Grauwertgradienten**

| Beispiel Nr. | Richtung [Grad] | bezogen auf | Dispersion (StdAbw) [Grad] | Flächenanteil [%] | Fit-Güte |
|---|---|---|---|---|---|
| 1A | -93,64 | MD | 20,88 | 0,33 | 0,99 |
| 1B | -91,02 | MD | 17,23 | 0,38 | 0,99 |
| 2A | -93,56 | MD | 19,07 | 0,31 | 0,98 |
| 2B | -91,11 | MD | 16,15 | 0,37 | 0,99 |
| 3A | -0,95 | TD | 19,52 | 0,76 | 0,99 |
| 3B | -1,16 | TD | 12,83 | 0,79 | 0,99 |
| 4A | -91,05 | MD | 10,46 | 0,41 | 0,99 |
| 4B | -91,17 | MD | 15,91 | 0,4 | 0,99 |

**Tabelle 3: Variation der Texturgrauwerte**

| Beispiel Nr. | StdAbw in TD | StdAbw in MD | StdAbw TD / MD |
|:---:|:---:|:---:|:---:|
| 1A | 12,1 | 4,4 | 2,8 |
| 1B | 9,0 | 3,6 | 2,5 |
| 2A | 14,8 | 4,3 | 3,4 |
| 2B | 9,8 | 3,9 | 2,5 |
| 3A | 5,6 | 3,6 | 1,6 |
| 3B | 5,7 | 3,8 | 1,5 |
| 4A | 6,6 | 2,6 | 2,5 |
| 4B | 6,4 | 5,2 | 1,2 |

Messmethoden

Die zur Charakterisierung der erfindungsgemäßen Folie und des ersten und zweiten polymeren Werkstoffs der Matrix eingesetzten Messverfahren sind nachfolgend beschrieben.

Die optische Textur der mindestens einen, Schlieren enthaltenden Dekorlage erfindungsgemäßer Folien wird mathematisch bzw. statistisch mithilfe softwaregestützter Bildanalyseverfahren charakterisiert. Hierzu wird zunächst aus einer erfindungsgemäßen Folie ein rechteckiges Folienstück mit einer Fläche von $\geq$ 100 cm$^2$ und einer minimalen Kantenlänge von $\geq$ 8 cm geschnitten. Die Schnitte werden parallel zur Transversal- und Maschinenrichtung geführt, so dass jeweils zwei Kanten des rechteckigen Folienstücks parallel zur Transversalrichtung und parallel zur Maschinenrichtung verlaufen. Von dem rechteckigen Folienstück wird mittels eines Flachbett-Scanners mit einer optischen Auflösung von 600 dpi (= 42,3 $\mu$m) ein digitales Bild aufgenommen. Gewöhnliche Kopierer und Flachbett-Scanner sind standardmäßig mit einer Optik mit einer Auflösung von bis zu 600 dpi ausgerüstet. Um die fließenden Farb- bzw. Luminanzübergänge (Helligkeitsübergänge) der optischen Textur erfindungsgemäßer Folien präzise zu erfassen, erweist sich jedoch eine Auflösung von 80 dpi (= 318 $\mu$m) als völlig ausreichend. Bei einer optischen Auflösung von 80 dpi umfasst das Digitalbild eines Folienstücks mit einer Fläche von 400 cm$^2$ etwa 396800 Bildpunkte (Pixel). Um eine hohe Bildqualität und Wiedergabetreue zu gewährleisten, werden die Folienstücke zunächst mit einer optischen Auflösung von 600 dpi gescannt. Die hochaufgelösten Scanbilder werden anschließend mittels einer Bildverarbeitungssoftware, wie beispielsweise Gimp (https://www.gimp.org/) auf eine Auflösung von 80 dpi herunter skaliert. Bei der Skalierung von 600 dpi auf 80 dpi werden die Farbkanäle bzw. die RGB-Farbwerte der 80 dpi Pixel aus den RGB-Werten der 600 dpi Pixel mittels horizontal und vertikal kubischer Interpolation ermittelt. Durch die Bildskalierung wird die Wiedergabetreue nicht beeinträchtigt. Visuell ist kein Unterschied zwischen einer mit 80 dpi und 600 dpi Auflösung wiedergegebenen Textur wahrnehmbar.

Sofern das mit dem Scanner aufgezeichnete digitale Bild des Folienstücks als Farbbild vorliegt, wird dieses in ein Grauwertbild gewandelt, wobei jedem Bildpunkt (Pixel) ein Grauwert entsprechend seiner Luminanz bzw. Helligkeit Y zugeordnet wird. Die Luminanz bzw. Helligkeit Y wird gemäß der PAL- oder NTSC-Norm (ITU-R BT.601 Wandlung) und dem MPEG-Standard nach der Formel

$$Y = 0,299 \cdot R + 0,587 \cdot G + 0,114 \cdot B \qquad \textbf{(II)}$$

aus den Farbwerten R (Rot), G (Grün) und B (Blau) des jeweiligen Bildpunktes (Pixel) berechnet (https://de.wikipedia.org/wiki/Luminanz). Die Wandlung in ein Grauwertbild wird mithilfe eines Grafikprogramms, wie Gimp (https://www.gimp.org/) oder einer Bildanalyse-Software, wie ImageJ (https://imagej.nih.gov/ij/) vorgenommen.

In dem erhaltenen Grauwertbild werden die Grauwertprofile von zehn zur Maschinenrichtung senkrechten, jeweils etwa 18 cm bzw. 567 Pixel langen Linien ausgewertet und die Standardabweichung der Grauwerte jedes Grauwertprofils berechnet. Aus den zehn derart berechneten Werten für die Standardabweichung wird dann der Mittelwert bestimmt und als repräsentatives Maß für die Ausprägung der streifenförmigen Schlieren in Transversalrichtung herangezogen.

Gleichermaßen werden die Grauwertprofile von zehn zur Maschinenrichtung parallelen, jeweils etwa 18 cm bzw. 567 Pixel langen Linien ausgewertet und die Standardabweichung der Grauwerte jedes Grauwertprofils berechnet. Aus den zehn derart berechneten Werten für die Standardabweichung wird dann der Mittelwert bestimmt und als repräsentatives Maß für die Grauwertstreeung der streifenförmigen Schlieren in Maschinenrichtung herangezogen.

Für die Analyse der Grauwertprofile der jeweils zehn etwa 18 cm langen, zur Maschinen- und Transversalrichtung parallelen Linien wird die Bildanalyse-Software ImageJ (Analyze Menu/Measure) verwendet.

Im Weiteren wird die Direktionalität bzw. die statistische Verteilung des Luminanz- bzw. Grauwertgradienten der optischen Textur bestimmt. Hierzu wird aus dem Grauwertbild des rechteckigen Folienstückes ein rechteckiger Bildausschnitt mit einer Größe von etwa 20 cm $\times$ 18 cm und etwa 630$\times$567 ~ 357121 Bildpunkten (Pixel) analysiert. Der rechteckige Ausschnitt ist derart gewählt, dass jeweils zwei seiner Kanten parallel zur Transversalrichtung und parallel zur Maschinenrichtung verlaufen. Für jeden Bildpunkt bzw. jedes Pixel P($i,j$) des rechteckigen Bildausschnitts werden eine zur Transversalrichtung parallele Komponente $G_T(i,j)$ und eine zur Maschinenrichtung parallele Komponente $G_M(i,j)$ des Grauwertgradienten berechnet, indem ein, um das betreffende Pixel P($i,j$) zentrierter Bereich mit 5$\times$5 = 25 Pixeln P($k,l$) mit $i$-2 $\leq k \leq i + 2$ und $j$-2 $\leq l \leq j + 2$ mit 5$\times$5 Sobel-Operatoren $S_T$ und, respektive $S_M$ gefaltet wird. Der mathematische Formalismus, einschließlich der Sobel-Operatoren für die Berechnung der Komponenten des

Grauwertgradienten $G_T(i,j)$ und $G_M(i,j)$ ist nachfolgend wiedergegeben, wobei das Symbol "*" den Faltungsoperator bezeichnet:

$$G_T(i,j) = S_T * P(i,j) = \sum_{k,l=-2}^{+2} S_T(k,l) \cdot P(i-k,j-l) \qquad \textbf{(III)}$$

$$G_M(i,j) = S_M * P(i,j) = \sum_{k,l=-2}^{+2} S_M(k,l) \cdot P(i-k,j-l) \qquad \textbf{(IV)}$$

$$S_T = \begin{pmatrix} 1 & 2 & 0 & -2 & -1 \\ 4 & 8 & 0 & -8 & -4 \\ 6 & 12 & 0 & -12 & -6 \\ 4 & 8 & 0 & -8 & -4 \\ 1 & 2 & 0 & -2 & -1 \end{pmatrix} \qquad \textbf{(V)}$$

$$S_M = \begin{pmatrix} -1 & -4 & -6 & -4 & -1 \\ -2 & -8 & -12 & -8 & -2 \\ 0 & 0 & 0 & 0 & 0 \\ 2 & 8 & 12 & 8 & 2 \\ 1 & 4 & 6 & 4 & 1 \end{pmatrix} \qquad \textbf{(VI)}$$

Bei den vorstehenden Sobel-Operatoren wird vorausgesetzt, dass die horizontalen Kanten des analysierten Bildausschnittes parallel zur Transversalrichtung und die vertikalen Kanten parallel zur Maschinenrichtung orientiert sind.

An den Kanten des analysierten Bildausschnittes werden zur Berechnung der Komponenten des Grauwertgradienten $G_T(i,j)$ und $G_M(i,j)$ die Kantenpixel herangezogen, d. h. es wird angenommen dass die zwei in Transversal- oder Maschinenrichtung zu einem Kantenpixel benachbarten und außerhalb des Bildausschnitts liegenden Pixel den gleichen Grauwert wie das betreffende Kantenpixel haben. Hierbei ist anzumerken, dass bei einem Bildausschnitt mit einer Größe von etwa 1180$\times$1180 Pixel der Beitrag der zwei bzw. vier Randpixel vernachlässigbar ist.

Aus den Komponenten des Grauwertgradienten $G_T(i,j)$ und $G_M(i,j)$ wird die Richtung bzw. der Winkel $\Theta(i,j)$ des Grauwertgradienten jedes Pixel P($i,j$) bezogen auf die Transversalrichtung gemäß der Formel

$$\Theta(i,j) = atan2(G_T(i,j), G_M(i,j)) \qquad \textbf{(VII)}$$

berechnet. Der Beitrag $W(i,j)$ des jeweiligen Pixel $P(i,j)$ wird entsprechend dem Betragsquadrat des Grauwertgradienten

$G_T^2(i,j) + G_M^2(i,j)$ gewichtet, d. h.

$$W(i,j) = \frac{G_T^2(i,j) + G_M^2(i,j)}{\sum_{i,j}[G_T^2(i,j) + G_M^2(i,j)]} \qquad \textbf{(VIII)}$$

Schließlich werden die Beiträge bzw. Gewichte $W(i,j)$ als Funktion des Winkels $\Theta(i,j)$ nach Art einer Häufigkeitsverteilung dargestellt. Hierbei zeigt sich, dass für einen erheblichen Teil der Bildpunkte bzw. Pixel P(i,j) der Grauwertgradient im Wesentlichen parallel zur Transversalrichtung orientiert ist. Anhand der mehr oder minder gaußförmigen Verteilung der Gewichte $W(i,j)$ um die Transversalrichtung werden die Direktionalität und deren Standardabweichung bestimmt. Hierzu wird mittels nichtlinearer Regression eine Gaußkurve an die Häufigkeitsverteilung der Gewichte $W(i,j)$ als Funktion des Winkels $\Theta(i,j)$ angepasst. Als Maß für die Direktionalität wird die Fläche unter der angepassten Gaußkurve in einem, um das Maximum der Gaußkurve zentrierten Bereich mit einer Breite von zwei Standardabweichungen berechnet.

Die vorstehend erläuterten Berechnungen zur Direktionalität der optischen Textur werden mithilfe der Bildanalyse-Software ImageJ (Analyze Menu/Directionality) durchgeführt. Eine ausführliche Beschreibung der Funktionsweise der Analysefunktion "Directionality" findet sich im Internet unter der Adresse https://imagej.net/Directionality.

Die softwaregestützte Analyse der Direktionalität erfindungsgemäßer Folien ist in Fig. 6, 8, 10 und 12 illustriert. Der Zeitaufwand für die benutzergeführte Analyse der optischen Textur eines Folienstückes mithilfe der Bildanalyse-Software ImageJ beträgt wenige Minuten.

Die Dichte der erfindungsgemäßen Folie wird nach DIN EN ISO 1183:2005 und die Dicke nach DIN 53370:2006 bestimmt.

Die Schmelze-Massefließrate bzw. der Meltflow Index MFI der polymeren Werkstoffe wird in der Regel gemäß DIN EN ISO 1133-1:2012-03 und bei wärmesensitiven polymeren Werkstoffen nach DIN EN ISO 1133-2:2012-03 gemessen. In der nachfolgenden Tabelle 4 sind die bei der Messung der Schmelze-Massefließrate MFI gemäß DIN EN ISO 1133-1:2012-03 und DIN EN ISO 1133-2:2012-03 verwendeten Messparameter wiedergegeben.

**Tabelle 4: Schmelze-Massefließrate Messbedingungen**

| Polymer | Prüftemperatur | Prüflast |
|---|---|---|
| Polystyrol[1]<br>Styrol-Butadien-Copolymer | 200 °C | 5 kg |
| Polyethylen<br>Polypropylen[2] | 190 °C | 2,16 kg |
| Polystyrol[3]<br>Polypropylen[4]<br>PETG<br>PETP[5]<br>APET | 230 °C | 2,16 kg |
| Cycloolefin-Copolymer | 260 °C | 2,16 kg |
| [1]für MFI-Werte im Bereich 20 bis 60 g/10min<br>[2]für MFI-Werte im Bereich 60 bis 100 g/10min<br>[3]für MFI-Werte im Bereich 1 bis 20 g/10min<br>[4]für MFI-Werte im Bereich 1 bis 60 g/10min<br>[5]für schnell kristallisierendes PETP Messung der intrinsischen Viskosität | | |

Im Fall von schnell kristallisierendem Polyester des Typs PETP wird die intrinsische Viskosität gemäß DIN EN ISO 1628-5:2015-05 gemessen und in eine Schmelze-Massefließrate umgerechnet nach der Formel

$$\mathrm{MFI} = 9 + 7322 \cdot 10^{-3,17 \cdot \mathrm{IV}}$$

worin IV die intrinsische Viskosität in der Einheit [dl/g] (Deziliter/g) und MFI die Schmelze-Massefließrate in der Einheit [g/10 min] bei einer Prüftemperatur von 230 °C und einer Prüflast von 2,16 kg bezeichnet.

Der Mittenrauwert $R_a$, die maximale Rauheit $R_z$ sowie die maximale Welligkeit $W_t$ der Oberfläche der Schlieren enthaltenden Dekorlage der erfindungsgemäßen Folie wird mittels eines taktilen Profilometers bestimmt, beispielsweise mit einem Instrument des Typs "Hommel-Etamic W20" der Firma Jenoptik oder des Typs "Perthometer S2/PGK" der Firma Mahr. Die Messung erfolgt gemäß den Normen DIN EN ISO 4287:2010 und DIN EN ISO 16610-21:2013. Hierbei wird eine Tastspitze mit einem Radius von kleiner 5 $\mu$m verwendet. Bei jeder Rauheitsmessung wird eine Taststrecke $l_r \geq 25$ *mm* abgetastet. Als Grenzwellenlänge $\lambda_C$ des Tiefpassfilters für die Trennung von Rauheit und Welligkeit gemäß DIN EN ISO 16610-21:2013 wird ein Wert von $\lambda_C = 2{,}5$ mm eingesetzt. Der Mittenrauwert wird gemäß der Formel

$$R_a = \frac{1}{l_r} \int\limits_0^{l_r} |Z(x)|\, dx \qquad (\textbf{\textit{IX}})$$

berechnet, wobei $Z(x)$ die gemessene Auslenkung senkrecht zur Folienoberfläche (Tiefe bzw. Höhe) als Funktion der Abtastposition *x* bezeichnet.

Sofern bei der erfindungsgemäßen Folie die Schlieren enthaltende Dekorlage nicht eine der beiden Oberflächen der Folie bildet, werden der Mittenrauwert $R_a$, die maximale Rauheit $R_z$ sowie die maximale Welligkeit $W_t$ anhand einer lichtmikroskopischen Aufnahme eines senkrecht zur Folienoberfläche geführten Folienschnittes bestimmt. Der Folienschnitt wird mithilfe eines Mikrotoms ausgeführt. Um ein digitales Bild des Folienschnittes aufzuzeichnen wird ein mit einer Digitalkamera ausgerüstetes Lichtmikroskop verwendet. Sofern das mit dem Lichtmikroskop aufgezeichnete digitale Bild des Folienstückes ein Farbbild ist, wird dieses in ein Grauwertbild gewandelt, wobei jedem Bildpunkt (Pixel) ein Grauwert entsprechend seiner Luminanz bzw. Helligkeit Y zugeordnet wird. Die Luminanz bzw. Helligkeit Y wird gemäß der PAL- oder NTSC-Norm (ITU-R BT.601 Wandlung) und dem MPEG-Standard nach der Formel

$$Y = 0{,}299 \cdot R + 0{,}587 \cdot G + 0{,}114 \cdot B \qquad (\textbf{II})$$

aus den Farbwerten R (Rot), G (Grün) und B (Blau) des jeweiligen Bildpunktes (Pixel) berechnet (https://de.wikipedia.org/wiki/Luminanz). Die Wandlung in ein Grauwertbild wird mithilfe eines Grafikprogramms, wie Gimp (https://www.gimp.org/) oder einer Bildanalyse-Software, wie ImageJ (https://imagej.nih.gov/ij/) vorgenommen.

In dem digitalisierten Grauwertbild des Folienschnittes ist die Grenze bzw. Kante der Schlieren enthaltenden Dekorlage durch einen Kontrastsprung gekennzeichnet und wird mittels einer Bildanalyse-Software, wie z. B. ImageJ (https://imagej.nih.gov/ij/) als Kurve extrahiert. Für die digitale Extraktion wird ein üblicher Kantendetektions-Filter (https://de.wikipedia.org/wiki/Kantendetektion), insbesondere ein 3×3 Sobel-Operator verwendet. Nach Anwendung des Kantendetektions-Filters wird das Bild durch Schwellwertbildung derart binarisiert, dass die Kante der Schlieren enthaltenden Dekorlage in Form einer Kurve aus schwarzen (weißen) Bildpunkten auf weißem (schwarzem) Hintergrund vorliegt. Aus dieser Kurve wird dann gemäß den Normen DIN EN ISO 4287:2010 und

DIN EN ISO 16610-21:2013 der Mittenrauwert $R_a$, die maximale Rauheit $R_z$ sowie die maximale Welligkeit $W_t$ bestimmt.

Um die optische Transmission der Matrix der Schlieren enthaltenden Dekorlage einer erfindungsgemäßen Folie zu bestimmen, wird aus dem ersten polymeren Werkstoff eine einlagige Referenzfolie nach dem gleichen Herstellungsverfahren wie die erfindungsgemäße Folie erzeugt. Die Dicke $d_{ref}$ der einlagigen Referenzfolie aus dem ersten polymeren Werkstoff wird gemäß DIN 53370:2006 gemessen.

Der Begriff "optische Transmission", wie in der vorliegenden Erfindung verwendet, bezieht sich auf die durchschnittliche totale Transmittanz $T_a$. Die totale Transmittanz $T(\lambda)$ der einlagigen Referenzfolie als Funktion der Wellenlänge $\lambda$ wird gemäß DIN EN ISO 13468-2:2006-07 unter Verwendung eines Spektrophotometers mit einer Ulbrichtkugel für die Detektion des transmittierten Lichts bestimmt (z.B. wird ein Shimadzu UV-3600 Plus Spectrometer mit ISR-1503 Ulbrichtkugel mit 150 mm Diameter oder ein Transparenzmessgerät des Typs "haze-gard i" der BYK-Gardner GmbH verwendet). Für die Messung der totalen Transmittanz $T(\lambda)$ wird ein kollimierter Strahl einfallenden Lichts mit Intensität $I_0(\lambda)$ in einer normalen bzw. senkrechten Richtung auf eine Oberfläche der Referenzfolie gerichtet. Der einfallende Lichtstrahl wird teilweise an den äußeren und inneren Oberflächen der Referenzfolie reflektiert. Die Summe der reflektierten Intensitäten wird als $I_R(\lambda)$ bezeichnet. Bei der Transmission des einfallenden Lichtstrahl in der Referenzfolie, werden weitere Intensitäten $I_A(\lambda)$, $I_{FS}(\lambda)$ und $I_{BS}(\lambda)$ des einfallenden Lichtstrahls ausgekoppelt, aufgrund von Absorption (A), Vorwärtsstreuung (FS) und, respektive Rückwärtsstreuung (BS). Aufgrund der Verwendung einer Ulbrichtkugel zur Detektion des transmittierten Lichtes wird die vorwärtsgestreute Lichtintensität $I_{FS}(\lambda)$ durch das Spektrophotometer aufgezeichnet. Dementsprechend kann die gemessene totale Transmittanz $T(\lambda)$ durch die folgende Gleichung beschrieben werden

$$T(\lambda) = c \, \frac{[I_0(\lambda) - I_R(\lambda) - I_{BS}(\lambda)]}{I_0(\lambda)} \qquad \textbf{(X)}$$

worin $c$ einen Faktor bezeichnet, der durch sorgfältige Kalibrierung des Spektrophotometers bestimmt wird, z.B. durch Messen der totalen Transmittanz ohne Probe. Die optische Transmission d.h. die durchschnittliche totale Transmittanz $T_a$ wird durch Mitteln von $T(\lambda)$ über den sichtbaren Wellenlängenbereich von 380 bis 780 nm, gemäß der Gleichung

$$T_a = \frac{1}{400 \, nm} \int\limits_{380 \, nm}^{780 \, nm} T(\lambda)\,d\lambda \qquad \textbf{(XI)}$$

erhalten.

Die optische Transmission der Matrix der Schlieren enthaltenden Dekorlage einer erfindungsgemäßen Folie wird bestimmt, indem die - wie vorstehend beschrieben, gemessene optische Transmission der einlagigen Referenzfolie der Dicke $d_{ref}$ gemäß dem Lambert-Beer-Gesetz auf die Dicke $d_L$ der Schlieren enthaltenden Dekorlage umgerechnet wird. Dem Lambert-Beer-Gesetz zufolge ist die Transmission durch einen Körper durch die Beziehung

$$\boldsymbol{T = \exp(-\alpha \cdot d)} \qquad \textbf{(XII)}$$

beschreibbar, wobei $\alpha$ den Absorptionskoeffizienten und $\boldsymbol{d}$ die optische Weglänge bzw. bei senkrechtem Lichteinfall die Dicke des Körpers bezeichnet. Aus der optischen Transmission und der Dicke $d_{ref}$ der einlagigen Referenzfolie wird der Absorptionskoeffizient $\alpha$ berechnet. Der Absorptionskoeffizient $\alpha$ und die Dicke $d_L$ werden sodann in die Lambert-Beer-Formel (III) eingesetzt, um die optische Transmission der Matrix der Schlieren enthaltenden Dekorlage zu bestimmen.

Die Dicke $d_L$ der Schlieren enthaltenden Dekorlage wird im Fall einer einlagigen Folie gemäß DIN 53370:2006 gemessen. Sofern die erfindungsgemäße Folie mehrere Lagen umfasst, wird die Dicke $d_L$ mittels eines lichtoptischen Mikroskops anhand einer mit einem Mikrotom angefertigten Querschnittsprobe der Folie bestimmt.

## Patentansprüche

1. Ein- oder mehrlagige Folie (1), **dadurch gekennzeichnet, dass** mindestens eine Dekorlage (2) der Folie (1) eine Matrix (3) aus einem ersten polymeren Werkstoff und in die Matrix (3) eingebetteten Schlieren (4) aus einem zweiten polymeren Werkstoff umfasst.

2. Folie (1) nach Anspruch 1, **dadurch gekennzeichnet, dass** das Volumenverhältnis der Schlieren (4) zur Matrix (3) 0,5 bis 15 Vol-% beträgt.

3. Folie (1) nach Anspruch 1 oder 2, **dadurch gekennzeichnet, dass** die Matrix (3) der Schlieren (4) enthaltenden Dekorlage (2) transparent ist.

4. Folie (1) nach einem oder mehreren der Ansprüche 1 bis 3, **dadurch gekennzeichnet, dass** der zweite polymere Werkstoff der Schlieren (4) enthaltenden Dekorlage (2) einen Farbstoff oder Farbpigmente enthält.

5. Folie (1) nach einem oder mehreren der Ansprüche 1 bis 4, **dadurch gekennzeichnet, dass** der erste und zweite Werkstoff der Schlieren (4) enthaltenden Dekorlage (2) eine Schmelze-Massefließrate $MFI_1$ und respektive $MFI_2$ aufweisen und $0,2 \le 2 \mid MFI_1 - MFI_2 \mid / (MFI_1 + MFI_2) \le 2,0$ ist.

6. Folie (1) nach einem oder mehreren der Ansprüche 1 bis 5, **dadurch gekennzeichnet, dass** der erste polymere Werkstoff der Schlieren (4) enthaltenden Dekorlage (2) einen Farbstoff oder Farbpigmente enthält.

7. Folie (1) nach einem oder mehreren der Ansprüche 1 bis 6, **dadurch gekennzeichnet, dass** die mindestens eine Schlieren (4) enthaltende Dekorlage (2) einen dritten polymeren Werkstoff mit einer Schmelze-Massefließrate $MFI_3$ umfasst und $0,2 \le 2 \mid MFI_1 - MFI_3 \mid / (MFI_1 + MFI_3) \le 2,0$ ist.

8. Folie (1) nach einem oder mehreren der Ansprüche 1 bis 7, **dadurch gekennzeichnet, dass** die mindestens die mindestens eine, Schlieren (4) enthaltende Lage (2) eine optische Textur hat, deren Luminanz in Transversal- und Maschinenrichtung der Folie eine Standardabweichung $S_T$ und respektive $S_M$ aufweist, wobei das Verhältnis $S_T$ / $S_M \geq 1,2$ ist.

9. Folie (1) nach einem oder mehreren der Ansprüche 1 bis 8, **dadurch gekennzeichnet, dass** die mindestens eine, Schlieren (4) enthaltende Lage (2) eine optische Textur hat mit einer Direktionalität von $\geq 20\,\%$ in einem Winkelbereich von $\pm 30$ Grad um die Transversalrichtung.

10. Folie (1) nach einem oder mehreren der Ansprüche 1 bis 9, **dadurch gekennzeichnet, dass** die mindestens eine, Schlieren (4) enthaltende Lage (2) mindestens eine Oberfläche oder Grenzfläche mit einem Mittenrauwert $R_a \leq 10$ $\mu$m aufweist.

11. Verfahren zur Herstellung einer ein- oder mehrlagigen Folie (1), umfassend die Schritte

(a) Bereitstellen eines ersten polymeren Werkstoffs mit Schmelze-Massefließrate $MFI_1$;
(b) Bereitstellen eines zweiten polymeren Werkstoffs mit Schmelze-Massefließrate $MFI_2$, wobei $0,2 \leq 2 \, | \, MFI_1 - MFI_2 \, | \, / \, (MFI_1 + MFI_2) \leq 2,0$ ist;
(c) Zuführen des ersten und zweiten polymeren Werkstoffs in einem Volumenverhältnis von 100:0,5 bis 100:15 in einen Extruder oder in ein Knetaggregat;
(d) Plastifizieren des ersten und zweiten polymeren Werkstoffs in dem Extruder oder Knetaggregat;
(e) Formen einer ein- oder mehrlagigen Folie (1), wobei mindestens eine, den ersten und zweiten polymeren Werkstoff enthaltende Lage (2) der Folie (1) durch Extrusion, Koextrusion und/oder Kalandrieren geformt wird.

12. Verfahren nach Anspruch 11, **dadurch gekennzeichnet, dass** der erste polymere Werkstoff transparent ist.

13. Verfahren nach Anspruch 11 oder 12, **dadurch gekennzeichnet, dass** der zweite polymere Werkstoff einen Farbstoff oder Farbpigmente enthält.

14. Verfahren nach Anspruch 11, 12 oder 13, **dadurch gekennzeichnet, dass** der erste polymere Werkstoff einen Farbstoff oder Farbpigmente enthält.

15. Ein- oder mehrlagige Folie (1), **dadurch gekennzeichnet, dass** die Folie (1) nach einem Verfahren gemäß einem oder mehreren der Ansprüche 11 bis 14 hergestellt ist.

Fig. 1

Fig. 2

Fig. 3

Fig. 4

## Fig. 5

Winkel des Grauwertgradienten bezogen auf MD [Grad]

## Fig. 6

## Fig. 7

Fig. 8

Fig. 9

Fig. 10

Fig. 11

Fig. 12

Europäisches
Patentamt

European
Patent Office

Office européen
des brevets

## EUROPÄISCHER RECHERCHENBERICHT

Nummer der Anmeldung

EP 18 18 3243

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/182697 A1 (LEMAY MATHIEU [CA] ET AL) 29. Juni 2017 (2017-06-29) * Absatz [0069] - Absatz [0080]; Abbildungen 1, 2 * * Zusammenfassung * * Absatz [0074] * * Absatz [0088] - Absatz [0089] * * Absatz [0112] * * Absatz [0120]; Abbildung 11A * * Absatz [0138] - Absatz [0144]; Abbildung 13 * ----- | 1-15 | INV. C08J5/18 B29C47/04 |
| X Y | DE 41 18 624 C1 (POLARCUP GMBH) 30. April 1992 (1992-04-30) * Zusammenfassung * * Seite 3, Zeile 39 - Zeile 66; Tabelle 2 * * Seite 4, Zeile 50 - Zeile 55; Abbildung 1 * * Ansprüche 1-3, 7, 8 * ----- | 1-4,6 11-15 | |
| X Y | DE 28 23 638 A1 (DAICEL LTD) 14. Dezember 1978 (1978-12-14) * Seite 4, Zeile 19 - Zeile 25 * * Seite 5, Zeile 18 - Zeile 36 * ----- | 1,4 11-15 | RECHERCHIERTE SACHGEBIETE (IPC) C08J B29C |
| X Y | DE 37 09 411 A1 (HUELS TROISDORF [DE]) 29. September 1988 (1988-09-29) * Zusammenfassung * * Spalte 3, Zeile 45 - Zeile 60 * ----- | 1,2,4,6 11-15 | |

Der vorliegende Recherchenbericht wurde für alle Patentansprüche erstellt

| Recherchenort | Abschlußdatum der Recherche | Prüfer |
|---|---|---|
| München | 20. Dezember 2018 | Meiser, Wibke |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 18 3243

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-12-2018

| Im Recherchenbericht angeführtes Patentdokument | Datum der Veröffentlichung | Mitglied(er) der Patentfamilie | Datum der Veröffentlichung |
|---|---|---|---|
| US 2017182697 A1 | 29-06-2017 | US 2017182697 A1<br>US 2018326619 A1 | 29-06-2017<br>15-11-2018 |
| DE 4118624 C1 | 30-04-1992 | AU 1907692 A<br>DE 4118624 C1<br>EP 0587661 A1<br>WO 9221505 A1 | 08-01-1993<br>30-04-1992<br>23-03-1994<br>10-12-1992 |
| DE 2823638 A1 | 14-12-1978 | DE 2823638 A1<br>GB 1604784 A<br>IT 1108504 B<br>JP S5534689 B2<br>JP S53149260 A | 14-12-1978<br>16-12-1981<br>09-12-1985<br>09-09-1980<br>26-12-1978 |
| DE 3709411 A1 | 29-09-1988 | DE 3709411 A1<br>EP 0283809 A2 | 29-09-1988<br>28-09-1988 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 1066339 B1